# EUROPEAN PATENT SPECIFICATION

(11) **EP 3 842 946 B1**
(45) Date of publication and mention of the grant of the patent: **06.11.2024**
(21) Application number: 19219535.2
(22) Date of filing: 23.12.2019
(51) Int. Cl.: G06F 11/30

(54) **METHOD AND SYSTEM FOR AUTOMATICALLY IDENTIFYING AND SYNTHESIZING CAPABILITIES**
VERFAHREN UND SYSTEM ZUR AUTOMATISCHEN IDENTIFIZIERUNG UND ZUSAMMENFASSUNG VON FÄHIGKEITEN
PROCÉDÉ ET SYSTÈME PERMETTANT D'IDENTIFIER ET DE SYNTHÉTISER AUTOMATIQUEMENT DES CAPACITÉS

(43) Date of publication of application: 30.06.2021
(73) Proprietor: Hexagon Technology Center GmbH, 9435 Heerbrugg (CH)
(72) Inventor: Rana, Asif, CH-9435 Heerbrugg (CH); Reimann, Bernd, CH-9435 Heerbrugg (CH); Recke, Utz, CH-9435 Heerbrugg (CH); Thomas, George Kenneth, Madison, Alabama 35758 (US)
(74) Representative: Kaminski Harmann

(56) References cited:
- EP-A1- 3 522 015
- DE-A1- 102016 103 713
- RAZVAN TATAROIU ET AL: "Remote Monitoring and Control of Wireless Sensor", 31 May 2009 (2009-05-31), XP055487028, Retrieved from the Internet <URL:https://elf.cs.pub.ro/wsn/wiki/_media/pdf/cscs17.pdf> [retrieved on 20180622]

## Description

The present invention pertains to a computer system and to a computer-implemented method for automatically identifying capabilities of a group of electronic devices, particularly capabilities that are needed or useful for performing a given task or a part thereof.

The capabilities might comprise sensor, production and processing or movement and transportation capabilities as well as communication, computing or data storage capabilities. In some embodiments, the identified capabilities include "unintended" capabilities, i.e. those capabilities that a device has as a side-effect of its intended capabilities or simply due to its design. For instance, these might include movement, heating or lighting capabilities of devices that are built and designed for other purposes.

A precondition for identifying capabilities is that they are previously unknown to the computer system. In many cases this includes that also the identities of the electronic devices themselves are unknown.

The electronic devices may be IoT-devices that are connectable to the Internet (IoT = Internet of Things). The devices need to have at least a minimum connectivity so as to allow the computer system to establish some kind of data connection with the devices.

Razvan Tataroiu et al. in "Remote Monitoring and Control of Wireless Sensor" (URL:https://elf.cs.pub.ro/wsn/wiki/_media/pdf/cscs17.pdf) describe a computer system for identifying capabilities of a group of electronic devices. 1

In EP 3 522 003 A1, a system "Edge Client" (EC) is described that provides extensible Internet of Things (IoT) edge solution, process automation, secure edge connectivity and dynamically changeable workflows. It can be used together with a system and data integration software such as "EdgeFrontier" (EF) of Intergraph Corp., Huntsville. Some integration tools that can be used with EC are disclosed in documents EP 3 156 898 A1, US 2008/0005287 A1, US 2008/ 0010631 A1 or US 7,735,060 B2.

EP 3 522 015 A1 describes a system and method to generate a workflow, wherein the devices that are considered in the workflow generation are self-describing. The devices are enabled to provide information about their identity, capabilities and workload to the system. This enables automated workflow generation. The system requires that compatible software agents are provided in the devices to connect them to the system and make them self-describing. This can be done by installing the agents on the devices or connecting modules with an agent installed on each module to the devices. The method described in said document EP 3 522 015 A1 however does not work for devices that do not have such an agent and cannot be equipped with such an agent.

It is therefore an object of the present invention to provide an improved method and system for identifying capabilities of electronic devices.

It is a further object to provide such a method and system that allow to identify capabilities without involving human interaction, e. g. fully automatically.

It is a further object to provide such a method and system that allow to identify capabilities that are not designated capabilities of an apparatus, e.g. unintended capabilities or side-effects of a designated capability.

It is another object to provide such a method and system that allow synthesizing new capabilities from capabilities identified in one or more devices.

It is yet another embodiment to provide such a method and system that allow performing a workflow using yet unidentified capabilities.

At least one of these objects is achieved by the computer system according to claim 1, the method according to claim 7 and/or the dependent claims of the present invention.

A first aspect of the invention relates to a computer system for identifying capabilities of a group of electronic as defined in claim 1.

The observer module is configured to identify, based on the observed data streams and using artificial intelligence, capabilities of the devices of the subset, wherein the device catalog is updated with the identified capabilities.

The computer system further comprises a capability catalog listing capabilities available in the group, wherein also the capability catalog is updated with the identified capabilities.

According to one embodiment, the computer system comprises
- a capabilities definition catalog providing definitions for synthesized capabilities and/or rules for constituting synthesized capabilities, wherein synthesized capabilities are capabilities that can be constituted based on other capabilities, e.g. be combined from capabilities listed in the capability catalog; and
- a capability synthesizing module configured to synthesize, based on the information from the capability definition catalog and based on capabilities available in the group, synthesized capabilities, wherein the synthesized capabilities are then stored in the device catalog and in the capability catalog.

In one embodiment, said capabilities definition catalog also provides definitions of capabilities that are not synthesized capabilities. In another embodiment, the capabilities definition catalog is updated with identified capabilities that are not yet defined in the capabilities definition catalog. In one embodiment, the capability synthesizing module is configured to update the capabilities definition catalog with definitions for synthesized capabilities.

In another embodiment, the observer module is configured to repeat identifying the capabilities after a pre-defined time interval and/or upon receiving a trigger, for instance wherein the trigger comprises information about a change related to the devices (e.g. a device being added to or removed from the group).

According to another embodiment of the computer system, at least a second subset of the devices of the group are smart devices, each smart device comprising self-describing functions configured for disclosing capabilities of the device, and the computer system further comprises a capability detection module configured for detecting the capabilities of the smart devices utilizing the self-describing functions and for updating the device catalog and the capability catalog with the detected capabilities.

In one embodiment, said capability detection module is further configured to receive identified capabilities from the observer module and to update the device catalog and the capability catalog with the identified capabilities, and/or to receive synthesized capabilities from the capability synthesizing module and to update the device catalog and the capability catalog with the synthesized capabilities.

According to another embodiment of the computer system, the devices comprise at least one or more first devices or second devices and at least one or more third devices, wherein
- first devices, e.g. being smart devices, are configured to grant the computer system access to a data storage of the respective first device, in particular wherein a compatible software agent is installed on the first devices,
- second devices are equipped with a module that is configured to exchange data with the device and to grant the computer system access to a data storage of the respective second device, e.g. so that the second devices become smart devices, in particular wherein a compatible software agent is installed on the module, and
- third devices are devices that are neither first devices nor second devices, i.e. are not smart devices.

The computer system comprises at least one discovery algorithm that is configured to use and has access to
- artificial intelligence (AI) for determining a type of device and/or for determining capabilities of the device that are not designated capabilities, e.g. synthesized capabilities;
- at least one data base comprising information about attributes of a multitude of known types of devices; and/or
- hacking tools for obtaining access to a data storage unit of the device and/or reconfiguring the device.

In one embodiment, the observer module comprises said discovery algorithm or has access to a platform providing the discovery algorithm, the AI, the at least one data base and/or the hacking tools.

The computer system is configured to receive sensor data from at least one sensor, the sensor data comprising information about at least one of the devices, wherein the at least one sensor is one of optical sensor, an acoustical and/or vibrational sensor, a temperature sensor, an infrared sensor, an electric field and/or magnetic field sensor, a radiation sensor, a mechanical and/or hydrodynamical sensor, an inertial sensor, a positioning or navigation sensor, or an integrated sensor, and wherein the discovery algorithm is configured to use the sensor data for at least one of
- determining the existence or availability of the at least one of the devices,
- determining a known type of the at least one of the devices, e.g. for identifying attributes of the device,
- identifying the capabilities of the at least one of the devices, and
- collecting basic information regarding the at least one of the devices, e.g. wherein said basic information is used for generating a candidate model for the device.

A second aspect of the invention pertains to a computer-implemented method, as defined in claim 7, for identifying by a computer system, for instance by the computer system of the first aspect, capabilities of a group of devices, said group comprising a plurality of electronic devices.

The identified capabilities are also stored in a capability catalog listing capabilities available in the group.

According to one embodiment, the method further comprises providing definitions for synthesized capabilities and/or rules for constituting synthesized capabilities, wherein synthesized capabilities are capabilities that can be constituted based on other capabilities, e.g. based on capabilities listed in the capability catalog, and synthesizing synthesized capabilities based on the information from the capability definition catalog and based on capabilities available in the group.

Said capabilities definition catalog further provides definitions of capabilities that are not synthesized capabilities. The capabilities definition catalog is updated when capabilities are identified that are not yet defined in the capabilities definition catalog.

According to another embodiment, the method further comprises receiving, at the computer system, a task to perform a process, wherein one or more sub-tasks have to be performed as part of the process, and identifying needed capabilities for performing each of the sub-tasks. Identifying capabilities of the devices then comprises determining a presence of the needed capabilities in the devices.

In one embodiment, the method further comprises calculating a workflow for performing said task, the workflow involving one or more devices, capabilities of which have been identified, distributing the sub-tasks to the one or more involved devices, and utilizing the one or more involved devices for performing the task.

Identifying capabilities of a device comprises using artificial intelligence to identify capabilities of the device that are unintended capabilities or not designated capabilities of the device, for instance wherein a presence of at least those unintended or not designated capabilities is determined that have been identified as needed capabilities.

According to another embodiment of the method, the plurality of electronic devices comprises at least one or more first devices or second devices and at least one or more third devices, wherein
- first devices, e.g. being smart devices comprising self-describing functions configured for disclosing capabilities of the device to the computer system, are configured to grant the computer system access to a data storage of the respective first device, in particular wherein a compatible software agent is installed on the first devices,
- second devices are equipped with a module that is configured to exchange data with the device and to grant the computer system access to a data storage of the respective second device, e.g. so that the second devices become smart devices, in particular wherein a compatible software agent is installed on the module, and
- third devices are devices that are neither first devices nor second devices, e.g. not smart devices.

For determining the capabilities of at least one third device, the method comprises an at least partially automatic running capability discovery process, in the course of which a type of at least one third device is determined or deduced using an artificial intelligence having access to a data base.

In one embodiment, in the course of said capability discovery process, hacking tools are used to obtain access to a data storage unit of at least one third device, and a data connection is established between the computer system and the third device, e.g. using said hacking tools. Protocols and/or functions may be installed on the device using the established data connection, and the capabilities of the third device may be identified using the installed protocols and/or functions. Suitable hacking tools optionally may be selected based on a determined or deduced type of device.

According to another embodiment of the method, determining the type of at least one device comprises identifying attributes of the device, and accessing a data base comprising information about attributes of a multitude of known device types. Determining the type may comprise recursively identifying more attributes of the device, if the identified attributes match attributes of more than one known type, and/or using probabilistic evaluation based on the identified attributes, such as correlation.

In one embodiment, said identifying of attributes of the device comprises generating, particularly based on available basic information regarding the device, a candidate model for the device, the candidate model comprising an assumed type and/or assumed functions of the device, and then verifying the assumptions and/or determining a degree of fulfilment of the assumptions. Generating the candidate model may comprise:
- considering environment information about the environment of the device, the environment information comprising information about devices that are typically present or to be expected in the environment,
- considering historical data concerning previous identification of capabilities, and/or
- using sensor data for collecting basic information regarding the device to base generating the candidate model on the collected basic information.

Verifying the assumptions and/or determining a degree of fulfilment of the assumptions may comprise:
- using hacking tools to enter access to a data storage unit of the device,
- executing commands, based on an assumed type of the device, for activating assumed functions of the device, and
- monitoring a behaviour of the device in response to each command.

According to another embodiment, the method further comprises
- establishing a data connection between the computer system and the one or more first devices or second devices,
- installing protocols and/or functions on the one or more first devices or second devices using the established data connection, and
- identifying capabilities of the one or more first devices or second devices using the installed protocols and/or functions.

At least one sensor provides sensor data to the computer system, the sensor data comprising information about at least one of the devices, e.g. about at least one third device or non-smart device. The at least one sensor is one of an optical sensor, an acoustical sensor, a vibrational sensor, a temperature sensor, an infrared sensor, an electric field sensor, a magnetic field sensor and a radiation sensor, and the sensor data is used for at least one of
- determining the existence and/or availability of the at least one of the devices,
- determining a known type of the at least one of the devices, particularly for identifying attributes of the device,
- identifying the capabilities of the at least one of the devices, and
- collecting basic information regarding the at least one of the devices, wherein the basic information is used for generating a candidate model for the device.

According to another embodiment of the method, the capabilities comprise at least one of
- sensing or measuring capabilities,
- production or processing capabilities,
- movement, transportation or positioning capabilities,
- heating or cooling capabilities,
- lighting or visualizing capabilities,
- communication capabilities,
- computation and/or data storage capabilities,
- electric charging or fueling capabilities, and
- repairing, maintaining or servicing capabilities.

According to another embodiment of the method, a position of each of the one or more devices is determined in a high-dimensional configuration space, the position being related to location, time, regulations and a state of the device. The position for instance may comprise a geographical location and an affiliation with a certain project within a certain time frame.

A third aspect of the invention pertains to a computer programme product comprising programme code which is stored on a machine-readable medium, or being embodied by an electromagnetic wave comprising a programme code segment, and having computer-executable instructions for performing, in particular when run on a computer system according to the first aspect, the method according to the second aspect.

The invention in the following will be described in detail by referring to exemplary embodiments that are accompanied by figures, in which:
- Fig. 1: shows an exemplary embodiment of a local measuring system as a part of a system according to the invention;
- Fig. 2: illustrates a first exemplary embodiment of a system according to the invention;
- Fig. 3: illustrates a second exemplary embodiment of a system according to the invention;
- Fig. 4: illustrates a third exemplary embodiment of a system according to the invention;
- Fig. 5: illustrates a first embodiment of a method according to the invention being performed by an exemplary embodiment of a computer system according to the invention;
- Fig. 6a: shows components of an exemplary apparatus, illustrating intended capabilities of the apparatus that result from the components;
- Fig. 6b: shows the components of Fig. 6a illustrating exemplary unintended capabilities of the apparatus that result from the components;
- Fig. 7: illustrates a second embodiment of a method according to the invention;
- Fig. 8: shows an exemplary embodiment of a system according to the invention, illustrating data flow between multiple layers and local systems;
- Fig. 9: illustrates an intelligent information platform used together with a system according to the invention;
- Fig. 10a: shows a first embodiment of a multi-agent system that can be used with a system according to the invention;
- Fig. 10b: shows a second embodiment of a multi-agent system that can be used with a system according to the invention;
- Fig. 11a: shows a table to illustrate an optimization of the allocation of identified devices to a task;
- Fig. 11b: shows a table to illustrate an evolving programs approach;
- Fig. 12: illustrates a fourth exemplary embodiment of a system according to the invention;
- Fig. 13: illustrates a fifth exemplary embodiment of a system according to the invention; and
- Fig. 14: shows an example of a workflow that is executable by the system of Fig. 13.

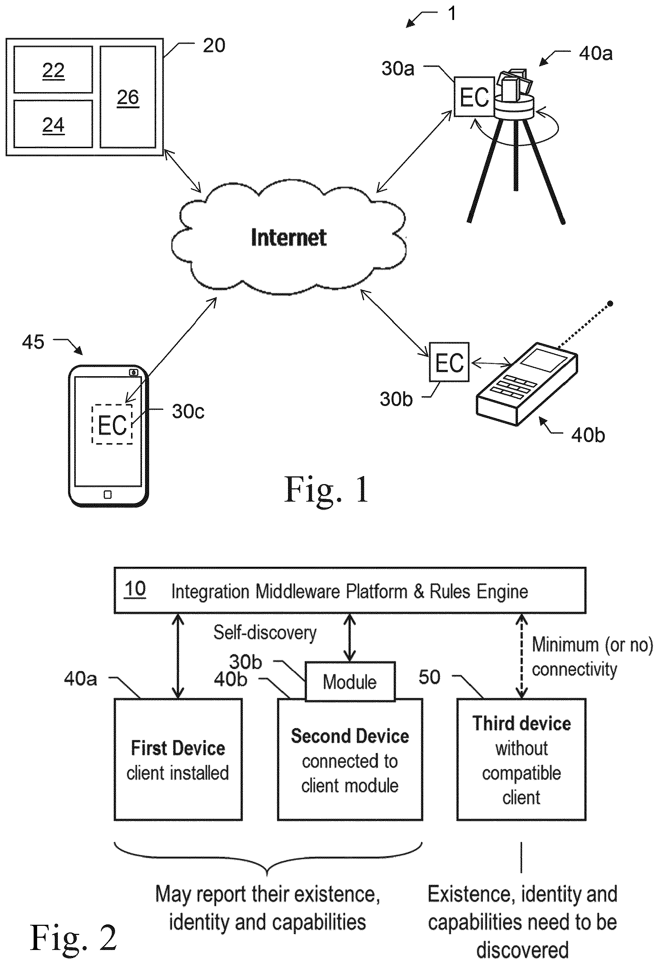

Figure 1 illustrates an exemplary embodiment of a local system 1 that is embodied as a local measuring system and can be connected to and used with a digital services distribution system according to the invention. The shown system 1 comprises edge computing device 20 and three software agents 30a-c (EC), wherein two agents are provided in agent modules 30a-b, each of which being connected to surveying devices 40a-b, and one software agent 30c is installed directly on a user device 45, e. g. as a mobile device application ("app").

Such local systems 1 might also be configured as "ecosystems" of an Autonomous Connected Ecosystems (ACE) system. ACE are a state where data is connected seamlessly through the convergence of the physical world with the digital, and intelligence is built-in to all processes. This comprises cyber-physical systems as part of "Industry 4.0".

Although the depicted devices 40a-b in these examples are adapted as surveying devices, the agents can also be provided in or at other kind of devices. These can be actuating devices like machine tools, industrial machines, manufacturing robots or construction machinery. Also other kinds of measuring devices than the depicted ones can be used, e. g. reality capture devices, laser trackers or total stations. Also unmanned aerial or ground vehicles (UAV/UGV) comprising surveying or other measuring equipment can be used, e. g. surveying drones or inspection robots.

The modules 30a-b with the agents installed thereon are connected to external devices 40a-b and adapted to exchange data with the respective connected device. For instance, such a connection might include using a universal serial bus (USB) or other hardware interface or a wireless data connection such as Bluetooth.

In the shown example, the devices comprise a laser scanning device 40a, a hand-held laser distance meter 40b, and a portable electronic device 45 that is assigned to a certain user. For instance, the portable device 45 can be a smartphone or tablet PC or a wearable such as a smart watch. As device 45 is adapted to allow installing external software or deploying a set of microservices, the respective agent 30c can be provided as a software application directly in the external device 45 instead of being provided in a module that is connectable to the device 45. It is also possible to provide the software by app delivery, e. g. by means of a mobile app that can be used for a certain workflow only or for a multitude of different workflows.

The computing device 20 comprises a computing unit 22 having a processor, a memory unit 24 adapted for storing data, and a communication unit 26 (e. g. comprising a modem) allowing data interchange with the agents 30a-c.

Alternatively, the computing device 20 can be embodied by a plurality of devices, with a user device operated by a user and further devices for performing the computing. Also, the application may run in a cloud. The computing device 20 may optionally also be embodied by a cloud or a plurality of devices.

As shown, the computing device 20 can be connected via the Internet with the remote agent modules 30a-b and the portable device 45 comprising the third agent 30c. This is especially useful, if a direct data transfer is not possible because the devices are positioned at a larger distance from each other, e. g. more than a hundred meters away, or if, for instance, a workflow comprises capturing data of a skyscraper with multiple measuring devices positioned in several stories of the building.

Alternatively, the computing device 20 and the agents 30a-c can be grouped locally together and connected with each other, for instance wirelessly, e. g. by means of a wireless local area network (WLAN) or by means of mesh networks such as LoRa (Long Range Wide Area Network) or ZigBee or Bluetooth. Also, some devices or modules may be connected via Internet and others connected locally to the computing device 20. Also, devices or modules can have both local and cloud connections.

The computing device 20 can be a user device such as a personal computer that is operated by a user and comprises input means such as keyboard and mouse for entering or selecting a task to be performed by the devices 40a-b, 45. Alternatively, especially in case of the second embodiment, the computing device 20 can be another portable device (such as the user device 45).

The system may optionally also provide a functionality to orchestrate new functionalities for the devices 40a-c. These new functionalities may comprise e. g. algorithms, fog analytics, control system strategies or safety & security features. This is possible e. g. through a combination of publishing of device information and reflection (= "self-description") of the devices' capabilities. The integration of all this information allows the orchestration of algorithms, analytics, etc. with the deployment of new workflows to specific systems. The system can play the role of the orchestrator of many systems with its ability to deploy workflows to other systems. Depending on the situation, one of the agents can also take the role of an orchestrator to manage other agents.

Also virtual devices can be formed that have capabilities of different devices merged. Devices can learn to understand, group and tailor device functionalities. Other devices can be mimicked. For instance, a total station, such as e. g. the Leica Nova MS60, could mimic the functions of a laser scanner, a handheld distance meter or even a plumb.

A multitude of local systems 1 like the one described in Figure 1 can be connected by a system according to the invention.

Figure 2 illustrates a first exemplary embodiment of a system according to the invention. A plurality of devices comprising first devices 40a, second devices 40b and third devices 50 are connected to a frontier platform - such as the depicted integration middleware platform 10 comprising a rules engine -, for instance via a local computing device (not shown here) . As illustrated with respect to Figure 1, first devices 40a have a client installed that allows communicating with the middleware platform 10, and second devices 40b are connected to a module on which a client 30b is installed. The clients make the first and second devices compatible with the middleware platform 10, so that they may report their existence, identity and capabilities to the system. This form of self-discovery is also described in EP 3 522 015 A1.

It is however not so easy for the middleware platform 10 to communicate with third devices 50 that have no compatible client installed on or connected to. This means that these devices' existence, identities and capabilities will need to be discovered if they are to be used by the system.

In some embodiments of the discovery process, at least a minimum connectivity is required, i.e. at least some means of electronic communication interface, particularly allowing wireless communication, must be available in the device 50.

In other embodiments, third devices 50 could be completely passive and do not have to be connected. In this case their existence may be detected by any means of sensing devices connected to the system, e.g. sensors that are part of one of the first or second devices. In an early stage of discovery, it might be sufficient to learn about such an unconnected device by indirect measurements and sensor data connected to first or second devices even before a connection with the platform 10 exists or is discovered.

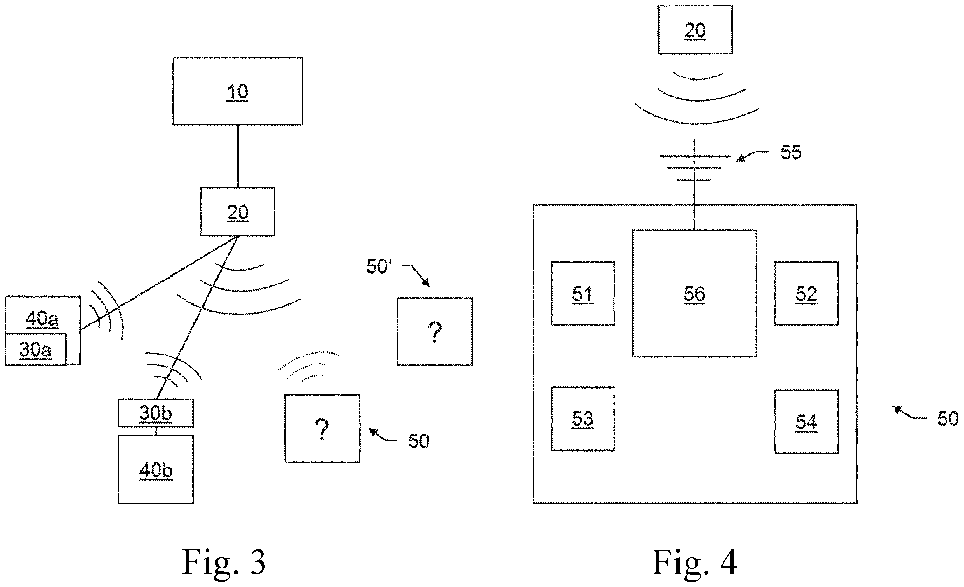

Figure 3 illustrates a second exemplary embodiment of a system according to the invention. A local communication device 20 is connected with the middleware platform 10, for instance via an Internet connection. The communication device 20 and four electronic apparatuses 40a, 40b, 50, 50' are present at a site. As illustrated with respect to Figure 1, these apparatuses may comprise measuring devices as well as other kinds of devices, such as, e. g. sensor devices, production devices, processing devices or transporting devices.

Some devices have a self-description ability or are adapted to communicate with the communication device 20 to exchange data that allows the communication device 20 to obtain data that allows identifying the devices and their capabilities. In the example of Figure 3, there is a first device 40a that has a software agent 30a installed to provide the communication functionality that allows identifying the device's capabilities. There is moreover a second device 40b that is connected with a module that has a software agent 30b installed to provide the same communication functionality.

Some devices 50, 50' at the site, however, do not have an agent installed, so that their identity and capabilities - and possibly even their existence - are unknown to the system. There are two of these "third devices" (described in Figure 2) depicted in Figure 3. However, there can be a multitude of these devices that are generally incompatible with the middleware platform 10. For instance, these devices are from third party manufacturers or have an outdated software installed and thus are not able to communicate their identity and capabilities to the system. If at least a minimum connectivity is provided, as is the case for device 50, it can be possible for the communication device 20 to detect that device's presence and start a discovery process in order to determine the device's identity and usable capabilities. If no such connectivity is provided, as is the case for device 50', the communication device 20 is not enabled to automatically detect the device 50' and discover identity and capabilities of the device 50'.

Figure 4 shows an exemplary embodiment of such a "third device" 50 having minimum connectivity. The depicted device comprises four components 51-54 providing functions and capabilities that are unknown to the system and should be discovered. The device further comprises communication means 55 that allow minimum connectivity with the local communication device 20 that is connected to the middleware platform (not shown here) and a control unit 56 that provides computing and data storage capability for controlling the components 51-54 of the device 50, e. g. gathering data of components that comprise sensors and making said data available via the communication means 55 or on a user interface (not shown here). The communication means 55 may be adapted to receive software updates or remote controlling instructions.

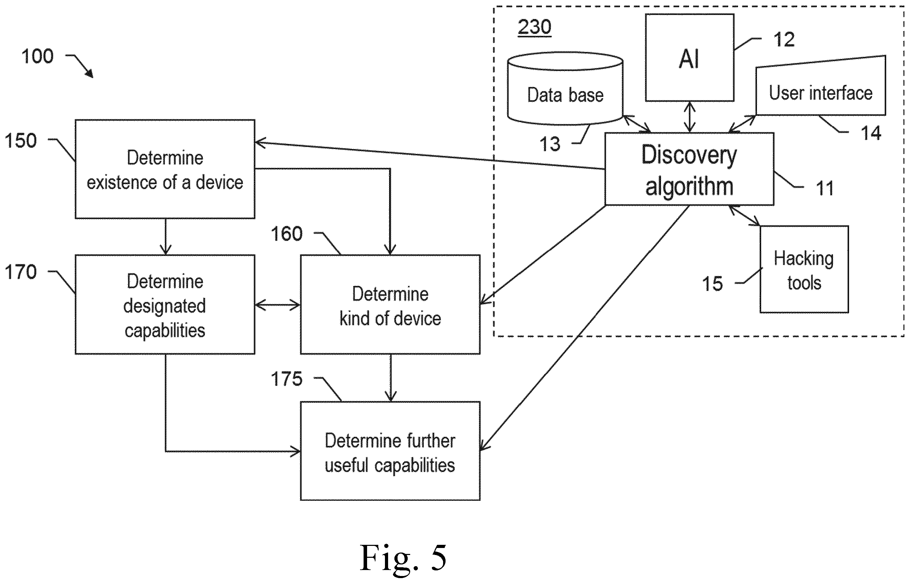

Figure 5 illustrates on its left portion an exemplary embodiment of a method 100 for identifying capabilities of an electronic apparatus according to the invention. On its right portion, Figure 5 illustrates tools 11-15 that may be used by the computer system to perform the method 100 or steps thereof as a computer-implemented method.

The illustrated method starts with determining the existence of a device (step 150). When the existence is known, the kind of the device, e. g. the type or model, needs to be determined (step 160). Additionally or alternatively, designated capabilities of the device can be determined (step 170). Designated capabilities are those capabilities that are related to the purpose of the device. For instance, designated capabilities of a laser scanner comprise a scanning functionality, and designated capabilities of a vehicle comprise a transportation functionality.

Based on the information about type or model of the device and/or its designated capabilities, it is also possible to determine further useful capabilities that are not designated, e. g. unintended, capabilities (step 175). Not designated capabilities comprise those functionalities that the device can be used for although it is not the purpose of the device to perform these functionalities. In some embodiments of the invention, it might be necessary to reconfigure the device to perform these unintended functionalities, in some embodiments these functionalities are inherent side-effects of a designated capability, and in some embodiments they are auxiliary or secondary capabilities which the device has to allow or improve for performing the designated "main" capability. For instance, a laser scanner - having the designated capability to scan a surrounding - has the unintended capability to perform single point measurements or to generate heat, vibrations and sound or noises by running its rotation motors.

The method 100 is performed by a computer system comprising a historian and observer module 230 (shortened: HOM or observer module) having a data connection with the middleware platform and a local communication device (not shown here), the local communication device being provided at the site of the devices and connected to the middleware platform (see Figure 3). The observer module 230 comprises implemented tools 11-15 that allow performing the method and is provided remotely in a cloud, or at the edge of the network, interacting with a cloud. In some embodiments, some or all tools may be provided at the middleware platform or the local communication device instead, so that some or all calculations may also be performed directly at the middleware platform or the local communication device.

One or more discovery algorithms 11 are configured to perform the steps of the shown method 100. The algorithm 11 has access to the other tools, comprising an artificial intelligence (AI) 12, one or more data bases 13 and optionally a user interface 14 and hacking tools 15.

Identifying the device may comprise establishing a data connection, for instance using hacking tools 15 to gain access to a computing or controlling device of the unidentified device. Protocols and functions are then installed on the device for identifying the device or its capabilities. This may be done by a trial-and-error method, giving random commands in a variety of known command languages and machine languages to control functions of the device that are assumed to be present. A reaction of the device is monitored to determine whether a command has given rise to a result. From the result, it can be deduced that a certain language is understood and that a certain function is present in the device. This deduction can be performed with the aid of the AI 12 and/or using a data base 13.

A data base 13 may comprise information about attributes of a multitude of known types of devices and identifying a type of device may comprise identifying such attributes of the device. Determining the known type optionally comprises using probabilistic evaluation based on the identified attributes, particularly correlation. This evaluation may be performed using the AI 12 that is programmed to analyse the available information about a device. Here both unsupervised and supervised machine learning techniques can be used. In the case of unsupervised AI, algorithms such as dimensionality reduction and clustering of data can be used. Based on attributes of a particular device, such techniques can indicate the degree of similarity to other types of devices, point out the closest fitting device type, or determine an anomaly score. In the case of supervised AI, algorithms trained on known device types and their attributes, or on historical data, can be used. In particular, classification methods based on, e.g., linear classifiers, support vector machines (SVM), Kernel estimation (such as k-nearest neighbour), decision trees (such as random forest) and/or neural network models (such as CNNs or RNNs) allow for discrimination of device types and hence for a classification of the device at hand. If the identified attributes of the device match attributes of more than one known type, recursively more attributes of the device may be identified to narrow-down the possible types.

For instance, if no unambiguous result can be achieved, a human user can be asked by the system, using the user interface 14, to identify the device. Alternatively or additionally, other devices in the vicinity of the unidentified device that comprise one or more camera or similar imaging devices can take images of the unidentified device. Using image analysis, the kind or model of device may be identified or narrowed-down to speed-up identification by other means. Likewise, other information about the device may be determined using image analysis. For instance, a manufacturer of the device may be identified, which may facilitate the communication unit establishing a communication link to the device to allow accurately identifying the device and its capacities using the hacking tools 15.

It is also possible to identify some unidentified devices, their capabilities, operation modes and conditions by means of microphones or other acoustical or vibrational sensors carried by other devices in the vicinity of the unidentified devices. Sound, noises or vibrations of e.g. the motor units or of rotating parts within an unidentified device can give valuable indications on the device's type and/or its present operation mode and condition. For instance, a presence of a device may be detected by a camera; using a microphone, it can be detected whether the device produces sounds from which capabilities, operation modes or conditions can be derived. The sounds could be that of a combustion engine or of a fan which would indicate that the device is running. The sounds may also comprise acoustical signals from the device such as audio warnings which might indicate an error condition of the device.

If the device is unknown to the system and there is no information in available data bases, an internet search for available information may be started automatically.

For identifying attributes of the device, a candidate model may be generated comprising an assumed type and/or assumed functions of the device, and the assumptions are then verified. Alternatively, a degree of fulfilment of the assumptions may be determined. Using a candidate model can reduce the time needed to identify a device, since the most probably present attributes are verified first.

The candidate model may be generated based on available basic information regarding the device. Moreover, environment information or historical data can be considered when generating the candidate model. The environment information comprises information about devices that are typically present or to be expected in the environment of the device that is to be identified. The historical data may concern previous identification of capabilities.

Verifying the assumptions or determining the degree of fulfilment of the assumptions may comprise using the hacking tools 15 to gain access to a data storage unit of the device, to execute, based on an assumed type of the device, commands for activating assumed functions of the device, and monitoring a behaviour of the apparatus in response to each command.

Thus, a position of the device in a high-dimensional configuration space can be determined, the position being related to location, time, regulations and a state of the apparatus. The position in high-dimensional configuration space for instance may comprise at least a geographical location and an affiliation with a certain project within a certain time frame.

Having identified the device, it can be decided whether the device is added to the system and/or granted access to information on the middleware platform. This can be done either automatically or by a user via the user interface 14.

Also, some devices may have been customized and thus have enhanced or limited capabilities, e.g. special features or disabled functionalities that differentiate the device from a standard device. Other devices may have malfunctions or other issues, wherefore some of their capabilities are disabled or restricted. Such non-standard conditions of a device preferably are determined after the device is identified.

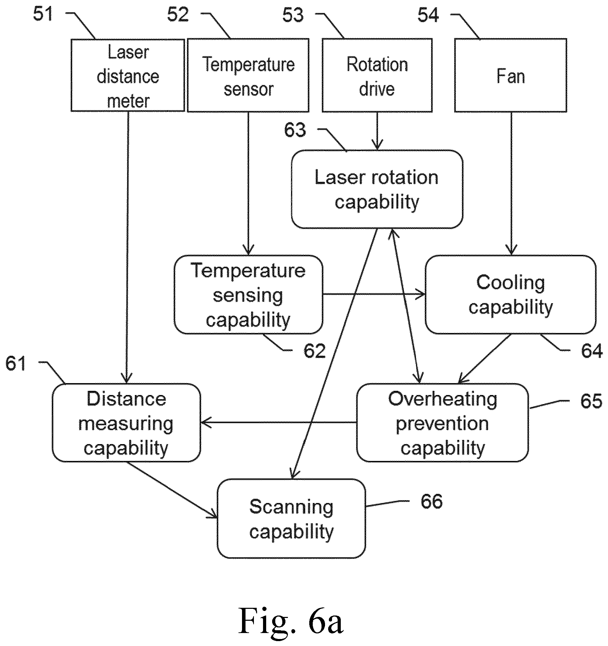

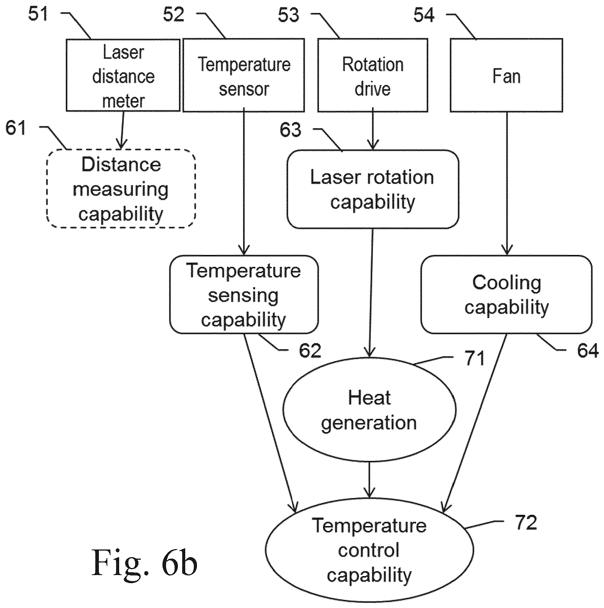

The Figures 6a and 6b illustrate by way of example designated and not designated capabilities of the device of Figure 4. Said exemplary device comprises four controllable components 51-54, consisting of a laser distance meter 51, a temperature sensor 52, a rotation drive 53 and a cooling fan 54.

The laser distance meter 51 provides a distance measuring capability 61. The rotation drive 53 is intended to provide a laser rotation capability 63, i.e. rotation of an emission direction for the laser distance meter 51. In combination, the distance measuring capability 61 and the laser rotation capability 63 provide the device's designated scanning capability 66.

Since the rotation drive emits heat when in operation, which might negatively affect the scanning capability 66, the temperature sensor 52 is intended to provide a temperature sensing capability 62 in the device and to control the intended cooling capability 64 of the fan 54. The cooling capability 64 allows the device's overheating prevention capability 65 prevent an overheating of the device due to the rotation drive's heat emission. The overheating prevention capability 65 allows the distance measuring capability 61, and the laser rotation capability, to work properly.

Having identified these designated capabilities and the device as being a laser scanner, the computer system identifies further capabilities that are not designated capabilities. This can be performed using the discovery algorithm 11 described with respect to Figure 5 and further tools such as an AI 12 , data bases 13 and hacking tools 15.

Using the exemplary device of Figure 6a, Figure 6b illustrates the conversion of said device for other purposes than the designated scanning. If, for example, the environment is too cold for another device to work properly, and there is no device with designated heating capability available, the computer system, using the discovery algorithm and the other tools, will look for temperature control capabilities in other devices that are available at the site.

Since the device with the rotation drive 53 comprises a device that generates heat by its laser rotation capability 63, this can be used for the unintended capability of heat generation 71. Since the device also has a temperature sensor 52 with a temperature sensing capability 62 and a fan 54 with a cooling capability 64, a temperature control capability 72 arises that allows controlled heating of the environment without jeopardizing the device's integrity. The distance measuring capability 61 of the device's laser distance meter cannot be used (or at least not used with the same effectiveness) while the not designated capabilities are used.

Other examples comprise performing a measurement task by a measurement device, wherein the measuring environment needs to be lighted but a lighting unit of the measurement device is broken or missing. In that case another device in the vicinity can be identified that need not be lighting devices but have a light source nonetheless.

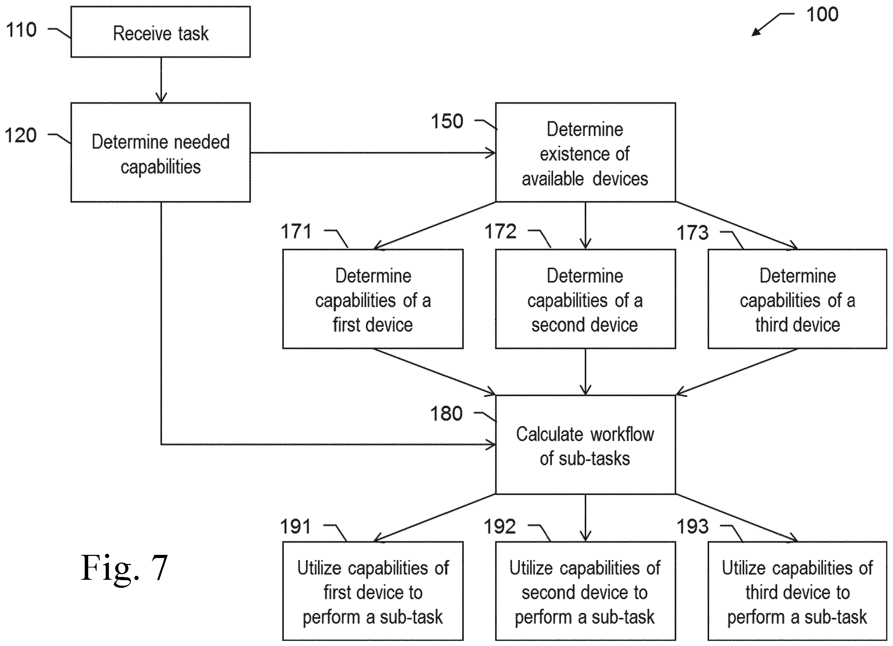

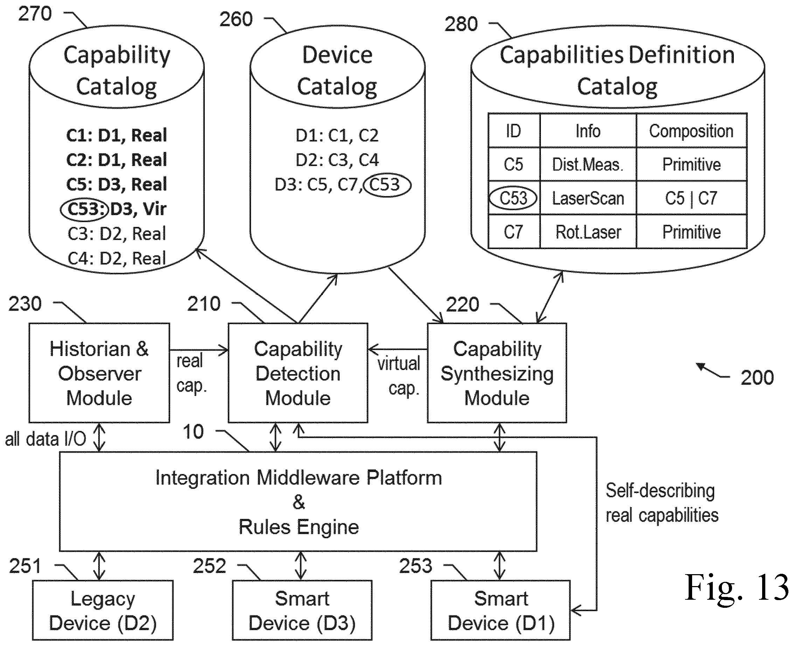

Figure 7 shows a flow chart illustrating a second exemplary embodiment of a method 100 according to the invention. In this embodiment, the method starts with receiving a task 110. In a next step, needed capabilities for performing the task, possibly consisting of a multitude of sub-tasks, are determined 120. The existence and availability of devices for performing a part of the task is then determined 150. As illustrated further above, this may include a self-identification of the devices or a discovery of the devices by a discovery algorithm of the system. Capabilities of a first, a second and a third device are then determined 171-173. These devices for instance may be those kinds of devices described with respect to Figure 2, or any three devices. The determined capabilities may be the designated capabilities or discovered capabilities that are not the designated capabilities. Based on the needed capabilities for the sub-tasks of the task and based on the determined capabilities of the three devices, a workflow of sub-tasks is calculated 180. Steps 150 and 171-173 of the method 100 can be performed within the context of the mechanism described with respect to the computer system 200 of Figure 13.

Utilizing the capabilities of the three devices, sub-tasks are performed 191-193 according to the calculated workflow. This may include using "designated" and "not designated" capabilities of the devices, i.e. capabilities that had or had not originally been intended or foreseen for such tasks or sub-tasks. Some or all of the device may have to be reconfigured to use some of their not designated capabilities. Reconfiguring devices for being used in the workflow, e.g., can be performed as described in EP 3 522 003 A1, or by means of the hacking tools as shown in Figure 5. Combinations or chains of devices may carry out a sub-task jointly, e.g. if each one of them would not have been capable to execute - either in a proper manner, within a given time limit or because they were simply lacking the individual capabilities.

As described in EP 3 579 161 A1, the workflow may be modified if a problem is reported. For instance, in the example of Figure 6b, one device involved in the workflow might determine and report that it is too cold to properly perform the given task. Then, the computer system automatically determines a solution which includes another available device to produce additional heat.

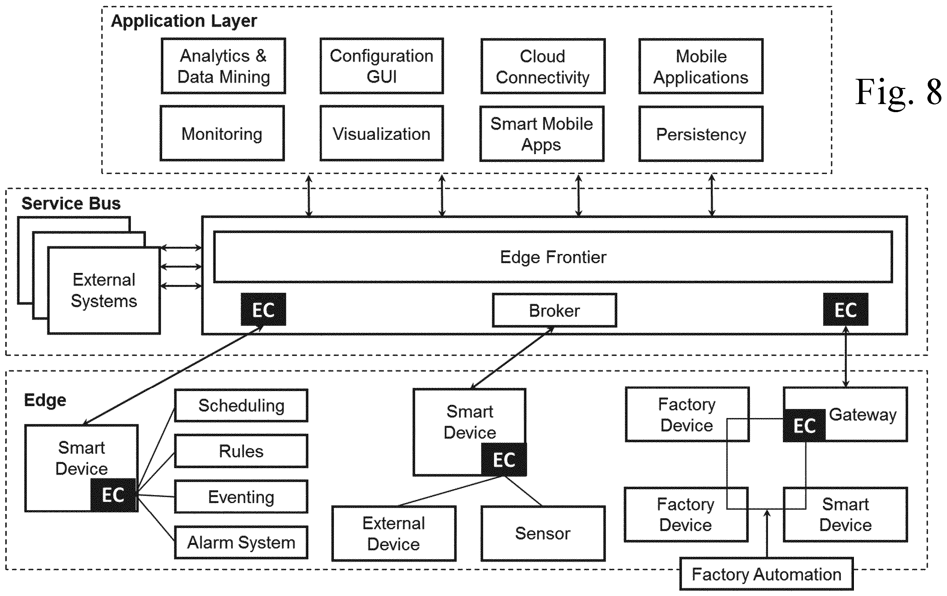

Figure 8 illustrates data flow between multiple layers and local systems in an exemplary computer system according to the invention. An enterprise service bus implements a communication system between mutually interacting software applications in a service-oriented architecture. As it implements a distributed computing architecture, it implements a special variant of the more general client-server model, wherein, in general, any application using the service bus can behave as server or client in turns. The service bus promotes agility and flexibility with regard to high-level protocol communication between applications. The primary goal of the high-level protocol communication is enterprise application integration of heterogeneous and complex service or application landscapes. In the illustrated system, the service bus is run using "EdgeFrontier" (EF) technology, connecting with a multitude of local systems at the "Edge". The term "edge" refers to the geographic distribution of computing nodes in the network, e. g. as Internet of Things (IoT) devices. In this example, each of the local systems comprises at least one device that is equipped with an "EdgeClient" (EC) software agent (described above with respect to Figure 1), providing data transfer with the EF service bus.

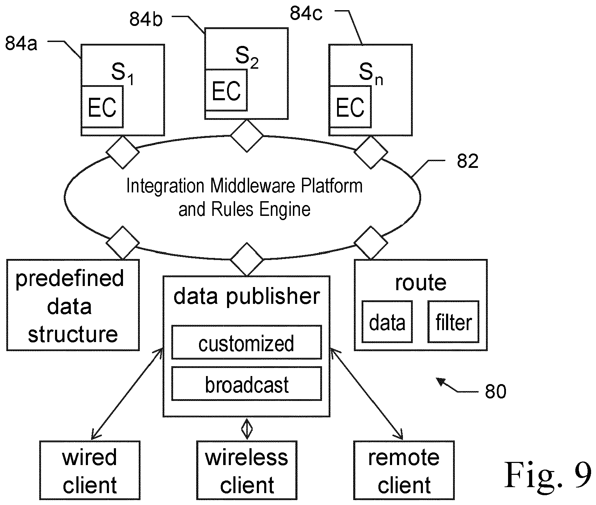

Figure 9 illustrates an intelligent information platform that can be used together with a system according to the invention and in some embodiments forms a part of the system according to the invention. In general, such a platform is described e. g. in the document EP 3 156 898 A1. The intelligent information platform provides a fully configurable distributed ERP-like (ERP = enterprise resource plan) information processing platform 80 that routes the information, based on certain rules and policies to a centralized decision engine 82. By embedding software agents providing extensible IoT edge solutions, such as EdgeClient (EC), the customized adapters 84a-c, as annotated by S₁...Sₙ, can be made intelligent through edge analytics and dynamically deployable workflows while still residing inside those external systems.

Such a platform can be enabled with the functionality of the apparatuses that can share, synchronize, reason and cooperate between each other about the processes they realize. The ability to realize a process is a capability. Each capability (e.g. drilling, carrying) relates to an atomic and single activity with multiple input and output parameters (position, temperature, humidity etc.). Such an apparatus - regardless of whether it is a "First", "Second" or "Third" device of Figure 2 - may also be called "agent".

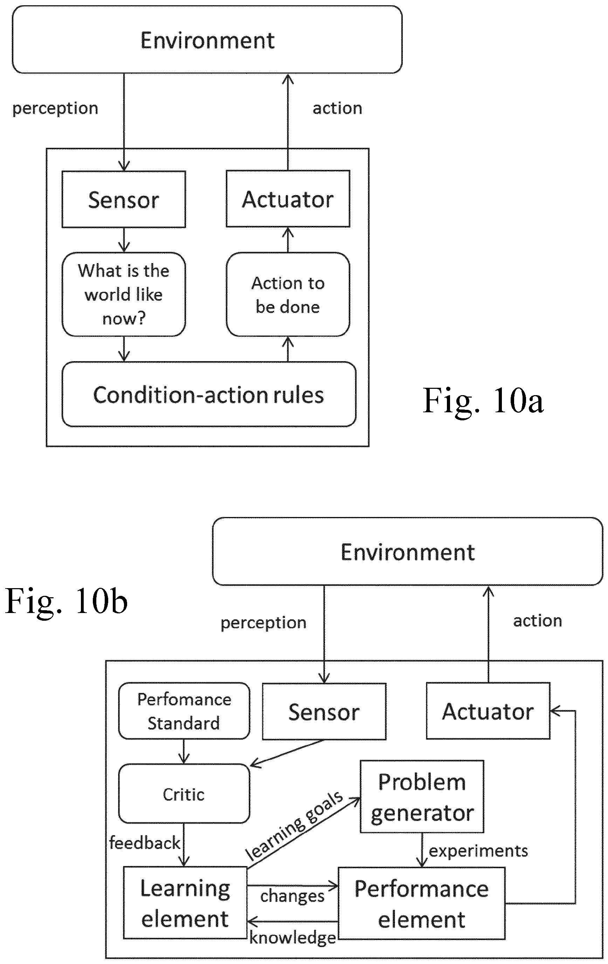

The concept of autonomous devices communicating and synchronizing each other's behaviour is widely developed under the term "multi-agent system" (MAS) or self-organized system. Two different MAS are illustrated in Figures 10a and 10b, Figure 10a showing a simple reflex agent and Figure 10b showing a learning agent. In this context, an agent is a device that, using sensors, gathers data that is organized and classified as input and output parameters for the capabilities. Algorithms need to be provided that occur at the moment the state of "what is the world like now" is translated into the description. The agents are cognitive and work in the continuous environments. Any sophisticated capability that cannot be described by the simplification of "input parameters, action, output parameters" has to be divided into a chain of related capabilities.

After gathering the information from the sensors and its quantification into data, a learning element and performance element use AI by means of e.g. heuristics, machine learning algorithms or evolving programs such as genetic programming to reason about the possible combination of capabilities. Both, learning and performance elements may be implemented as EC services and used in the context of the system and method according to the invention. Here, the sensors include inter-agent communication protocol over Message Queuing Telemetry Transport (MQTT) or other means of communication, that are utilized by EC. The conducted actions are not only including the physical operation of the device, but as well EC communication over MQTT and negotiation for the cooperation of the devices.

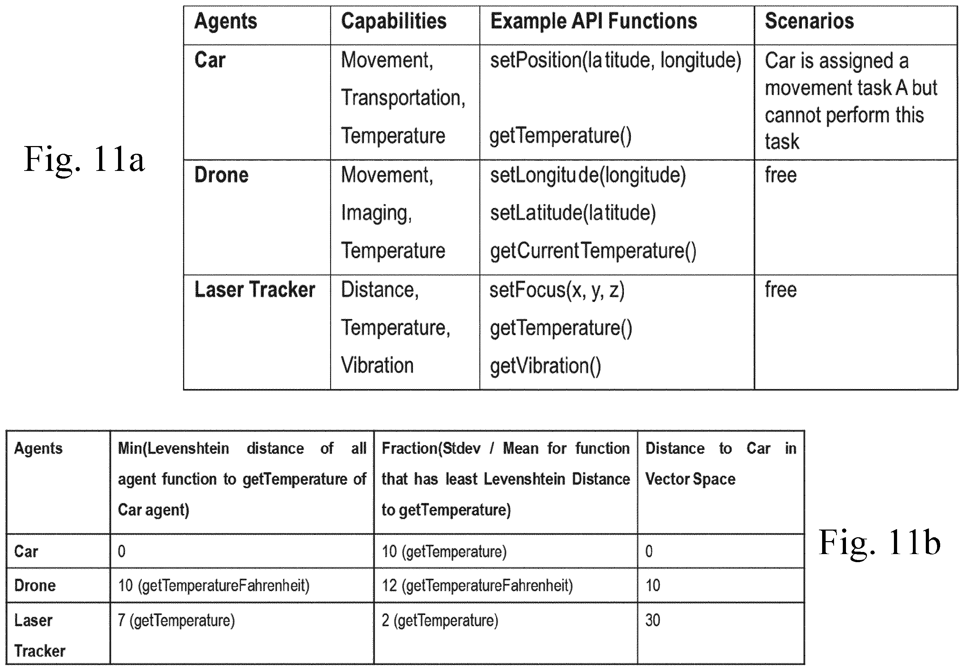

In the example scenario of Figures 11a and 11b, a system comprises the three agents "Car", "Drone" and "Laser Tracker" as members of a system, each having certain capabilities represented by API functions. In the scenario of Figure 11a, the car is assigned a movement task "A" but cannot perform this task. A human operator would be able to reason that the drone could do the job instead of the car and map the task from the car to the drone accordingly.

However, an MAS is not capable to understand the meaning of the API functions that make up the capability of an agent. In order to discover whether another member of the system has the desired capability, an iterative process is used: First, the next best agent is identified, then mapping of functionality is attempted. The next best agent could be chosen either generally or based on a specific desired capability. The general idea is to look at the context of the agent (mapped to a multi-dimensional vector space), without knowing the features of the space. Features could be generated using AI, in particular evolutionary algorithms such as genetic algorithms, genetic programming and/or heuristics, as part of an optimization problem where the goal is to maximise separation of agents in the vector space whilst following certain constraints (e.g. successful or failed mapping operations). The table of Figure 11b gives an idea of what features the AI might come up with. Evolutionary approaches could be used to map functionalities from one agent to another agent. Under the assumption that the agent "car" has a function getTemperature() which returns temperature in Celsius whilst the agent "drone" has a function getTemperatureFahrenheit() which returns temperature in Fahrenheit, based on history of function calls the algorithm might be able to correlate the functions due to the underlying distribution of the data (e.g. seasonality in temperature, day/night pattern, etc.).

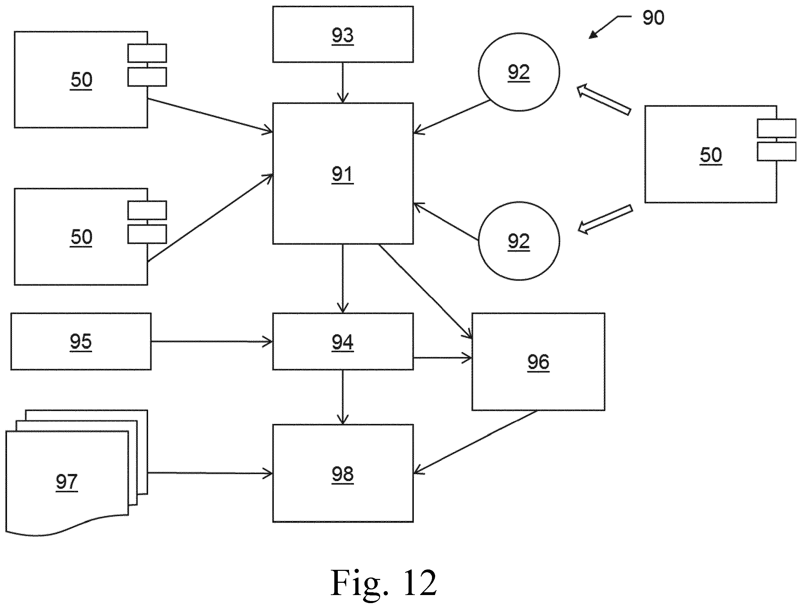

Figure 12 illustrates another embodiment of a system 90 according to the invention, that allows performing a nonstandard, i.e. unusual, job scheduling, which comprises finding and associating entities 50 that may or may not be designed to fulfill a certain job at hand. The entities 50 may be third devices as described above, e.g. with respect to Figure 4.

Within the system, data from three observable entities 50, each having a number of parameters, is gathered in a first memory 91. The definition of entity 50 is highly flexible and depends on the application. Gathering data may comprise that the data can be "actively" sent on some arbitrary purpose or be gathered "indirectly" by observation from outside the entity 50 - i.e. by observations performed by sensors 92, such as optical, acoustical, thermal, magnetic or electric field sensors. These sensors 92 determine any measurable change or status of the observed entities 50, such as e.g. light and color changes, sound or noise, heat, electric and magnetic fields, or other radiation. The data can be augmented by feeding in prior knowledge 93, e.g. machine specifications or associations of entity and operators.

In a more and more connected system, data can be gathered and entity properties derived. This can be aided with the prior knowledge 93 and with additional sensor data to gain more, better quality or timely information. Algorithms based on simple statistics to highly specific AI can be employed to associate, classify and group relevant entity parameters.

The gathered data may be provided from the first memory 91 together with data from a second memory 95 that comprises parameter and entity associations and matching likelihoods to a data processor 94. There, using e.g. statistics and artificial intelligence, and comprising a continuous process of finding similarities, classifying, grouping, deriving parameters and associating to entities, the data is processed. The gathered data and the processed data can be sent to a display 96 or other human interface to allow human supervision.

The processed data and task data 97 with requirements for the given task, e.g. comprising a list of parameters, are matched using algorithms to prioritize tasks for the entities 50 and to dispatch a task assignment as a decision 98 of the system 90. Especially in a first phase, depending on the maturity of the system final decision, a user interaction, based on the data presented on the display 96 can adapt the task assignment.

The system 90 of Figure 12 may be deployed for a large variety of different applications. A first example refers to a mining environment, where many vehicles of different types and for different purposes exist as observable entities 50. Vehicle types may comprise dump trucks for heavy loads, "regular" automobiles, e.g. for inspection and small loads, and emergency vehicles (small loads, but typically bigger than that of "regular" automobiles). The types may also comprise electric and combustion driven vehicles or road and rail operated vehicles, each having different load sizes and different areas where they are allowed or preferred to operate. In this example, the task would be to transfer some load from point A to point B, wherefore it is necessary to identify which entity can fulfill the job. The load may be characterized by size, by weight, whether it is splittable etc. An algorithm identifies all entities that are classified to be a vehicle (e.g. that are capable to move), identifies all vehicles that can carry the load (i.e. have a sufficient size for the load, or - if the load can be split - have a sufficient minimum size for a part of the load), and ranks the remaining list of vehicles. The job is dispatched to the highest ranked vehicle. Later, information is gathered whether the task was accomplished successfully and feedback is provided to the system to improve the automated candidate selection for the next tasks.

A second example refers to an identification of an entity that can be used to generate heat. In many machines, heat is a side effect. In a normal combustion engine or electric motor, the actual aim is to generate a mechanical movement, and the heat is "wasted" energy. However, for an unusual job this "waste" might be helpful to fulfill the job. In this case, the algorithm would search for all entities that show temperature measurements and then rank them by one or more parameters like observed sharp temperature rises in the past and temperatures measured at the entity that are not correlated with an environment temperature. Sharp temperature changes indicate that something in the entity can generate heat quickly, and uncorrelated temperatures ensure that the read temperature is not just a reading from the environment, thus indicating that the entity comprises an active heat generator. Alternatively or in addition, properties such as waste heat creation can be estimated, e.g. from entities' power consumption over time and their physical volume.

The needed information about an entity may be gathered using different means. For instance, these comprise
- an input to existing data, e.g. machine specifications;
- a link with existing systems, e.g. computer-aided dispatch or job-side control software;
- observing existing communication, e.g. over LAN or wireless such as Bluetooth, GSM or radio;
- the use of video surveillance and image recognition algorithms to identify the entity visually and/or the use of audio or vibration analysis algorithms to do so acoustically; and/or
- the installation and use of additional sensors.

If machine communication exists, a further option is mining data from a local machine bus (CAN bus based like J1939 or typical automobile ODB-2). Often, the application programming interface (API) provides names and parametrization of functions and values that are good sources for understanding what the data are about. Even previously unknown machines can be integrated into the system using API and protocol reflection.

In some embodiments, the entire system learns continuously. The more knowledge of good quality is in the system, the better it can build models to classify and add new data. Especially in the beginning, it is advantageous that the system is supervised, wherein each recommendation how to fulfill a given job is acknowledged or rejected by a human operator. The system can learn from this additional input to make better job assignments in the future.

The sensors may comprise:
- optical sensors, e.g. cameras or laser distance meters,
- acoustical or vibrational sensors, e.g. microphones, ultrasonic or time of flight meters,
- temperature sensors,
- infrared sensors, e.g. infrared cameras,
- electric or magnetic field sensors, e.g. ground penetrating radar devices,
- radiation sensors,
- mechanical and/or hydrodynamical sensors, e.g. configured for measuring volume, force, pressure, momentum or flow,
- inertial sensors such as inertial measurement units (IMU),
- positioning or navigation sensors such as GNSS, and/or
- integrated sensors, e.g. provided by coordinate measuring machines, laser trackers or laser scanners.

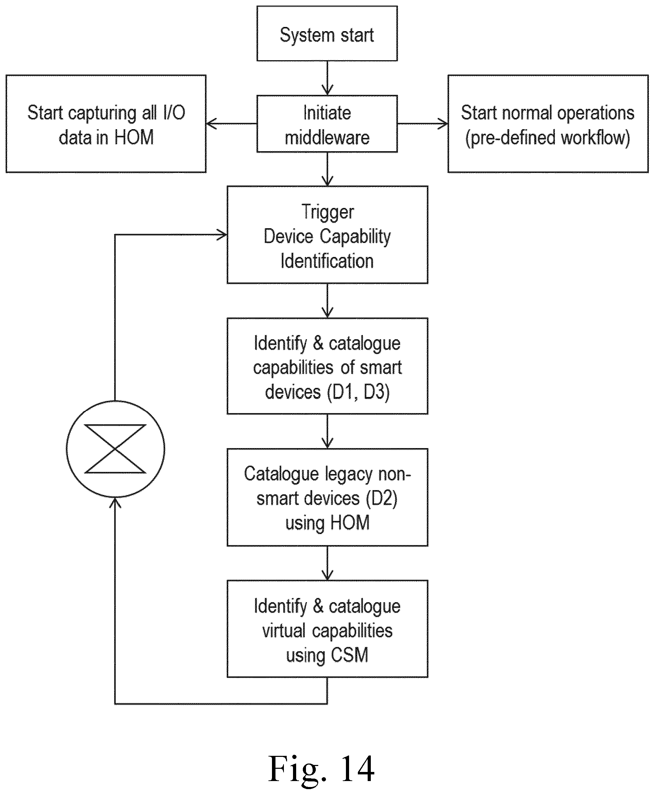

Figure 13 illustrates a fifth exemplary embodiment of a system 200 according to the invention, and Figure 14 shows a flow chart illustrating an example of a workflow that is executable by said system 200, e.g. as a part of a method for identifying capabilities of a group of devices according to the invention.

The system 200 comprises a number of "catalogs" that are databases, e.g. stored on a data storage device of the system.

The device catalog 260 is a database of the devices (D1, D2, D3) identified in the system 200 with a catalog of the available capabilities in each device. The devices can be smart devices 252, 253 (can be either hardware or a software) or legacy devices 251. The capabilities C1, C2, C3, C4, C5, C7 of these devices 251-253, i.e. the intended capabilities, have been automatically detected. This database provides a reverse-mapping of the information that is available in the capability catalog 270. In addition, this table contains a list of additional capabilities (C53) that are considered "synthesized" or "virtual" (Vir), in that they are computed or detected indirectly from the other available ("real") capabilities.

In some embodiments, the legacy devices 251 may be the third devices 50 of Figure 2, and the smart devices 252, 253 may be the first and second devices.

The capability catalog 270 comprises a database table, structure, or graph containing all capabilities (C1, C2, C3, C4, C5, C53) available in the system that have either been detected through self-describing functions of the smart devices 252, 253 or automatically through an AI-based module such as an observer module 230 (here: historian and observer module).

All of the capabilities in this table are linked back to the devices (D1, D2, D3) that encompass those capabilities. The capabilities can be either "real" or "virtual". Real capabilities are available as intrinsic or primitive functions of a device. Virtual capabilities are identified or discovered functions that can be created or configured ("synthesized") through a mathematical function of other virtual or real capabilities.

The capability definitions catalog 280 provides two types of information:
- definitions of real capabilities (C5, C7) that are intrinsic and fundamental in nature and cannot be resolved into more primitive capabilities; and
- definitions for virtual capabilities (C53) in the form of rules to create ("synthesize") new virtual capabilities based on other real or virtual capabilities - for example, for a laser scanning capability to be available, a device needs to provide distance measurement, as well as rotating laser capabilities; similar constituting rules for other virtual capabilities are provided in this catalog.

By adding new capability definitions into this catalog 280, the system 200 becomes intelligent to discover new virtual capabilities that could be readily available for performing a given task that requires such capabilities.

The capability detection module (CDM) 210 is responsible for detecting and cataloguing all the capabilities in the system, whether real or virtual. For smart devices 252, 253, this module uses the self-describing functions of these entities to enquire and store the capabilities in the capability catalog 270 as well as in the device catalog 260.

For legacy devices 251, the CDM 210 uses the historian and observer module (HOM) 230 to detect real capabilities.

For both smart and legacy devices, the CDM 210 relies on the capability synthesizing module 220 to synthesize the virtual capabilities that are available in the system.

The capability synthesizing module (CSM) 220 synthesizes virtual capabilities from real capabilities utilizing the information from the capability definition catalog 280 and based on available devices and their capabilities in the device catalog 260.

The historian and observer module (HOM) 230 is activated to observe and learn the capabilities of legacy devices 251 that do not provide any smart functions for capability detection. In some embodiments, the legacy devices are the third devices 50 of Figure 2. The HOM 230 has access to all the Input and Output (I/O) data streams that go into and emit from a legacy device 251 connected to the on-premises middle-ware platform 10, which comprises a rules engine.

Optionally, all three modules 210, 220, 230 may be connected to the middleware platform 10. Whereas the HOM 230 accesses device I/O data streams, also the CDM 210 and/or the CSM 220 may access the platform 10 for providing and/or receiving necessary data and instructions. For instance, this could comprise
- receiving trigger commands to start detecting or synthesizing capabilities,
- publishing a status information on the platform 10, or
- indirectly accessing self-describing capability interfaces of the smart devices 252, 253.

In some embodiments, the HOM 230 is configured to interact directly with the platform 10. Optionally, the middle-ware platform 10 may be a part of the computer system 200 and/or comprise the HOM 230. Alternatively or additionally, the HOM 230 may comprise the discovery algorithm 11 and the AI 12 of Figure 2, optionally having access to the data base 13, the user interface 14 and/or the hacking tools 15.

By observing the I/O data streams, the HOM 230 can create an AI model of the device 251. Matching the pre-known capabilities from the capability definitions catalog 280 to the known capabilities of the pre-existing devices and their I/O data streams, the HOM 230 can identify the capabilities of a legacy device 251. Once these capabilities are identified, and optionally after having been validated by a human expert, they are stored in both device and capabilities catalogues 260, 270. If the newly identified capability is a new type of capability, this will also be stored in the capability definition catalog 280.

In the example of Figure 13, the capability C53 is a "virtual" capability that has been synthesized from the capabilities C5 and C7 of device D3. Accordingly, this device comprises the synthesized capability C53 as well. In other examples, a virtual capability might need to be synthesized from capabilities of more than one device. In this case, these devices would need to work together to provide such a synthesized capability. In some cases, a device may already be configured to provide a synthesized capability, for instance simply by providing two or more capabilities jointly, e.g. at the same time or subsequently. In other cases, the device needs to be reconfigured in order to provide the synthesized capability. Information about such reconfigurations (which may require hacking tools as described above with respect to Figure 5) can be stored as a part of or together with the definition for the virtual capability in the capability definition catalog 270.

Sensing signals may come into the system using connected devices. In a simple example that the desired effect is heat, e.g. because a device connected to the system needs to be heated in order to work properly. In this case, even if another device is not connected (or connectable) to the system and thus cannot be actively influenced by the system, it might still produce heat (e.g. process waste heat) that can be used to heat the device. In order to influence the amount of heat, one might simply change the relative position of the measuring device that needs to get heated, e.g. by moving it closer to the unconnected device.

In an early stage of discovery, it might be sufficient to learn about such an unconnected device by indirect measurements or from sensor data, e.g. provided by first or second devices, even before a connection exists or is discovered. Devices that are not connected to the system can be detected, classified and cataloged, e.g. using the sensors of the system described with respect to Figure 12. Once these devices are detected and at least some of their capabilities are known or can be assumed, the system can try to detect or establish a connection with these devices or simply dispatch an operator, e.g. to turn on a switch in order to connect the device.

Steps 150 and 171-173 of the method 100 described with respect to Figure 7 can be performed within the context of the mechanism described with respect to the computer system 200 of Figure 13.

As illustrated with respect to Figure 14, a workflow using the system 200 of Figure 13, after a start of the system and the initialization of the middleware 10 runs as follows. Normal operations according to a pre-defined workflow are started and all I/O data streams are captured in the HOM 230.

At certain points of time during the workflow, e.g. according to a defined frequency (such as every hour, once a day etc.), identification of device capabilities is triggered using the CDM 210. Subsequently, capabilities of the system's smart devices 252, 253 are identified and catalogued in the capability catalog 270. Next, the legacy, i.e. non-smart, devices 251 and their capabilities are catalogued using the HOM 230. The CSM 220 is then used to identify and catalogue the virtual capabilities. After a certain period of time, e.g. according to the defined frequency, a new device capability identification is triggered (time-triggered). For instance, the frequency may be defined based on an average number of devices that are added to and/or removed from the system per time unit.

Alternatively or additionally, a new device capability identification can be performed user-triggered or event-triggered, e.g. when a new device becomes available or a previously available device is removed or loses a capability, and this event is detected by the system or a user of the system. Alternatively, instead of performing the device capability identification workflow time-triggered, user-triggered or event-triggered, the system can perform the workflow continuously, e.g. without delay between two workflows.

## Claims

1. Computer system (200) for identifying (170, 175) capabilities of a group of electronic devices (251-253), each device (251-253) of the group having one or more designated capabilities, at least a first subset of the devices of the group being connected to a middle-ware platform (10) by means of a data link, wherein the computer system (200) comprises
- a device catalog (260) listing known devices and designated capabilities of each listed device; and
- an observer module (230) having access to data streams between the middle-ware platform (10) and the subset of the devices (251-253) and being configured to observe the data streams,
the computer system (200) being configured to receive sensor data from at least one sensor (92), the sensor data comprising information about at least one of the devices (251-253),
**characterized in that**
the observer module (230) comprises or has access to at least one discovery algorithm (11) that
- has access to at least one data base (13) comprising information about attributes of a multitude of known types of devices,
- is configured to use the sensor data for identifying attributes of the at least one of the devices (251-253), and
- is configured to determine (160) a known type of the at least one of the devices (251-253),
wherein determining (160) the known type of a device comprises performing a probabilistic evaluation based on identified attributes of the device, the evaluation being performed using an artificial intelligence (12) that is programmed to analyse available information about a device,
wherein the observer module (230) is configured to identify (170, 175), based on the observed data streams and using the artificial intelligence (12), capabilities of the devices (251-253) of the subset that are not designated capabilities, wherein the device catalog (260) is updated with the identified capabilities.

2. Computer system (200) according to claim 1, comprising
- a capability catalog (270) listing capabilities available in the group, wherein the capability catalog (270) is updated with the identified capabilities;
- a capabilities definition catalog (280) providing definitions for synthesized capabilities and/or rules for constituting synthesized capabilities, wherein synthesized capabilities are capabilities that can be constituted based on other capabilities, in particular can be synthesized by combining capabilities listed in the capability catalog (270); and
- a capability synthesizing module (220) configured to synthesize, based on the information from the capability definition catalog (280) and based on capabilities available in the group, synthesized capabilities, wherein the synthesized capabilities are stored in the device catalog (260) and in the capability catalog (270),
particularly wherein
- the capabilities definition catalog (280)
- provides definitions of capabilities that are not synthesized capabilities, and/or
- is updated with identified capabilities that are not yet defined in the capabilities definition catalog (280); and/or
- the capability synthesizing module (220) is configured to update the capabilities definition catalog (280) with definitions for synthesized capabilities; and/or
- the observer module (230) is configured to repeat identifying the capabilities after a pre-defined time interval and/or upon receiving a trigger, particularly wherein the trigger comprises information about a change related to the devices (251-253).

3. Computer system (200) according to claim 2, wherein
- at least a second subset of the devices of the group are smart devices (252, 253), each smart device comprising self-describing and/or self-reflecting functions configured for disclosing capabilities of the device, and
- the computer system further comprises a capability detection module (210) configured for detecting the capabilities of the smart devices (252, 253) utilizing the self-describing or self-reflecting functions and for updating the device catalog (260) and the capability catalog (270) with the detected capabilities,
particularly wherein the capability detection module (210) is further configured
- to receive identified capabilities from the observer module (230) and to update the device catalog (260) and the capability catalog (270) with the identified capabilities; and/or
- to receive synthesized capabilities from the capability synthesizing module (220) and to update the device catalog (260) and the capability catalog (270) with the synthesized capabilities.

4. Computer system (200) according to claim 3, wherein the devices comprise at least one or more first devices (40a) or second devices (40b) and at least one or more third devices (50), wherein
- first devices (40a) are configured to grant the computer system access to a data storage of the respective first device, in particular wherein a compatible software agent (30a) is installed on the first devices,
- second devices (40b) are equipped with a module (30b) that is configured to exchange data with the device and to grant the computer system access to a data storage of the respective second device, in particular wherein a compatible software agent is installed on the module, and
- third devices (50) are devices that are neither first devices nor second devices,
in particular wherein the first and second devices (40a,b) are smart devices (252, 253).

5. Computer system (200) according to any one of the preceding claims, wherein the discovery algorithm (11) is configured to use and has access to hacking tools (15) for obtaining access to a data storage unit (56) of the device and/or reconfiguring the device, particularly wherein the observer module (230) comprises or has access to:
- the artificial intelligence (12),
- the at least one data base (13) and
- the hacking tools (15).

6. Computer system (200) according to any one of the preceding claims, wherein the at least one sensor (92) is one of an optical sensor, an acoustical and/or vibrational sensor, a temperature sensor, an infrared sensor, an electric field and/or magnetic field sensor, a radiation sensor, a mechanical and/or hydrodynamical sensor, an inertial sensor, a positioning or navigation sensor, or an integrated sensor, and wherein the sensor data is used by the discovery algorithm (11) for at least one of
- determining (150) the existence and/or availability of the at least one of the devices (251-253),
- identifying (170-175) the capabilities of the at least one of the devices (251-253), and
- collecting basic information regarding the at least one of the devices (251-253), particularly wherein the basic information is used for generating a candidate model for the device.

7. Computer-implemented method (100) for identifying (170, 175) by a computer system, capabilities of a group of devices, the group comprising a plurality of electronic devices (251-253), each device (251-253) of the group having one or more designated capabilities, wherein at least one sensor (92) provides sensor data to the computer system, the sensor data comprising information about at least one of the devices (251-253),
**characterized by**
determining (160) a known type of the at least one of the devices (251-253), wherein determining (160) the known type comprises
- using the sensor data to identify attributes of the device,
- accessing a data base (13) comprising information about attributes of a multitude of known device types, and
- performing a probabilistic evaluation based on identified attributes of the device, the evaluation being performed using artificial intelligence (12) that is programmed to analyse available information about a device,
wherein the method further comprises
- accessing and observing data streams between a middle-ware platform (10) and at least a subset of the devices (251-253);
- using the artificial intelligence (12) and the data base (13) for identifying, based on the observed data streams, capabilities of the devices (251-253) of the subset that are not designated capabilities; and
- storing the identified capabilities in a device catalog (260), the device catalog (260) listing known devices and capabilities of each listed device.

8. Method (100) according to claim 7, comprising
- storing the identified capabilities in a capability catalog (270), the capability catalog (270) listing capabilities available in the group;
- providing definitions for synthesized capabilities and/or rules for constituting synthesized capabilities, wherein synthesized capabilities are capabilities that can be constituted based on other capabilities, in particular based on capabilities listed in the capability catalog (270); and
- synthesizing, based on the information from the capability definition catalog (280) and based on capabilities available in the group, synthesized capabilities,
particularly wherein the capabilities definition catalog (280)
- provides definitions of capabilities that are not synthesized capabilities; and/or
- is updated with identified capabilities that are not yet defined in the capabilities definition catalog (280).

9. Method (100) according to claim 7 or claim 8, comprising
- receiving (110), at the computer system, a task to perform a process, wherein one or more sub-tasks have to be performed as part of the process, and
- identifying (120) needed capabilities for performing each of the sub-tasks,
wherein identifying capabilities of the devices (251-253) comprises determining a presence of the needed capabilities in the devices,
particularly wherein
- the method further comprises calculating (180) a workflow for performing the task, the workflow involving one or more devices, capabilities of which have been identified, distributing the sub-tasks to the one or more involved devices, and utilizing (191-193) the one or more involved devices for performing the task; and/or
- identifying capabilities of a device comprises using artificial intelligence (15) to identify capabilities of the device that are unintended capabilities (71-72) or not designated capabilities (61-66) of the device, particularly wherein a presence of unintended or not designated capabilities (61-66, 71-72) is determined that have been identified as needed capabilities.

10. Method (100) according to any one of claims 7 to 9, wherein the plurality of electronic devices comprises at least one or more first devices (40a) or second devices (40b) and at least one or more third devices (50),
wherein
- first devices (40a) are configured to grant the computer system access to a data storage of the respective first device, in particular wherein a compatible software agent (30a) is installed on the first devices,
- second devices (40b) are equipped with a module (30b) that is configured to exchange data with the device and to grant the computer system access to a data storage of the respective second device, in particular wherein a compatible software agent is installed on the module, and
- third devices (50) are devices that are neither first devices nor second devices,
wherein, for determining the capabilities of at least one third device (50), the method comprises an at least partially automatic running capability discovery process, in the course of which a type of at least one third device (50) is determined or deduced using an artificial intelligence (12) having access to a data base (13), in particular wherein
- in the course of the capability discovery process, hacking tools (15) are used to obtain access to a data storage unit (56) of at least one third device (50), and a data connection is established between the computer system and the third device, particularly using the hacking tools (15), wherein
- protocols and/or functions are installed on the device using the established data connection, and the capabilities of the third device (50) are identified (170-175) using the installed protocols and/or functions, and/or
- suitable hacking tools (15) are selected based on a determined or deduced type of device,
in particular wherein the first and second devices (40a,b) are smart devices (252, 253) comprising self-describing or self-reflecting functions configured for disclosing capabilities of the device to the computer system, and the third devices (50) are not.

11. Method (100) according to claim 10, wherein determining (160) the type of at least one device comprises recursively identifying more attributes of the device, if the identified attributes match attributes of more than one known type, in particular wherein identifying attributes of the device comprises
- generating, particularly based on available basic information regarding the device, a candidate model for the device, the candidate model comprising an assumed type and/or assumed functions of the device, and
- verifying the assumptions and/or determining a degree of fulfilment of the assumptions,
particularly wherein
- generating the candidate model comprises
- considering environment information about the environment of the device, the environment information comprising information about devices that are typically present or to be expected in the environment,
- considering historical data concerning previous identification of capabilities, and/or
- using sensor data for collecting basic information regarding the device to base generating the candidate model on the collected basic information; and
- verifying the assumptions and/or determining a degree of fulfilment of the assumptions comprises
- using hacking tools (15) to enter access to a data storage unit (56) of the third device (50),
- executing commands, based on an assumed type of the third device (50), for activating assumed functions of the third device (50), and
- monitoring a behaviour of the third device (50) in response to each command.

12. Method (100) according to claim 10 or claim 11, comprising
- establishing a data connection between the computer system and the one or more first devices (40a) or second devices (40b),
- installing protocols and/or functions on the one or more first devices (40a) or second devices (40b) using the established data connection, and
- identifying (170-175) capabilities of the one or more first devices (40a) or second devices (40b) using the installed protocols and/or functions.

13. Method (100) according to any one of claims 7 to 12, wherein the at least one sensor (92) is one of an optical sensor, an acoustical and/or vibrational sensor, a temperature sensor, an infrared sensor, an electric field and/or magnetic field sensor, a radiation sensor, a mechanical and/or hydrodynamical sensor, an inertial sensor, a positioning or navigation sensor, or an integrated sensor, and wherein the sensor data is used for at least one of
- determining (150) the existence and/or availability of the at least one of the devices,
- determining (160) a known type of the at least one of the devices, particularly for identifying attributes of the device,
- identifying (170-175) the capabilities of the at least one of the devices, and
- collecting basic information regarding the at least one of the devices, wherein the basic information is used for generating a candidate model for the device.

14. Method (100) according to any one of claims 7 to 13, wherein the capabilities comprise at least one of
- sensing or measuring capabilities,
- production or processing capabilities
- movement, transportation or positioning capabilities,
- heating or cooling capabilities,
- lighting or visualizing capabilities,
- communication capabilities,
- computation and/or data storage capabilities,
- electric charging or fuelling capabilities, and
- repairing, maintaining or servicing capabilities.

15. Computer programme product comprising programme code, which is stored on a machine-readable medium, or being embodied by an electromagnetic wave comprising a programme code segment, and having computer-executable instructions which, when the programme is executed by the computer system according to any one of claims 1 to 6, cause the computer to carry out the method (100) according to any one of claims 8 to 14.

## Patentansprüche

1. Computersystem (200) zur Identifizierung (170, 175) von Fähigkeiten einer Gruppe elektronischer Vorrichtungen (251-253), wobei jede Vorrichtung (251-253) der Gruppe eine oder mehrere ausgewiesene Fähigkeiten aufweist, wobei wenigstens eine erste Untermenge der Vorrichtungen der Gruppe mittels einer Datenverbindung mit einer Middleware-Plattform (10) verbunden ist, wobei das Computersystem (200) Folgendes umfasst:
- einen Vorrichtungskatalog (260), der bekannte Vorrichtungen und ausgewiesene Fähigkeiten jeder aufgelisteten Vorrichtung auflistet; und
- ein Beobachtermodul (230), das Zugriff auf Datenströme zwischen der Middleware-Plattform (10) und der Untermenge der Vorrichtungen (251-253) hat und dafür konfiguriert ist, die Datenströme zu beobachten,
wobei das Computersystem (200) dafür konfiguriert ist, Sensordaten von wenigstens einem Sensor (92) zu empfangen, wobei die Sensordaten Informationen über wenigstens eine der Vorrichtungen (251-253) umfassen,
**dadurch gekennzeichnet, dass**
das Beobachtermodul (230) wenigstens einen Erkennungsalgorithmus (11) umfasst oder Zugriff darauf hat, wobei dieser
- Zugriff auf wenigstens eine Datenbank (13) hat, die Informationen über Attribute einer Vielzahl von bekannten Typen von Vorrichtungen umfasst,
- dafür konfiguriert ist, die Sensordaten zur Identifizierung von Attributen der wenigstens einen der Vorrichtungen (251-253) zu verwenden, und
- dafür konfiguriert ist, einen bekannten Typ der wenigstens einen der Vorrichtungen (251-253) zu bestimmen (160),
wobei das Bestimmen (160) des bekannten Typs einer Vorrichtung das Durchführen einer probabilistischen Bewertung auf der Grundlage der identifizierten Attribute der Vorrichtung umfasst, wobei die Bewertung unter Verwendung einer künstlichen Intelligenz (12) durchgeführt wird, die dafür programmiert ist, verfügbare Informationen über eine Vorrichtung zu analysieren,
wobei das Beobachtermodul (230) dafür konfiguriert ist, auf der Grundlage der beobachteten Datenströme und unter Verwendung der künstlichen Intelligenz (12) Fähigkeiten der Vorrichtungen (251-253) der Untermenge zu identifizieren (170, 175), die keine ausgewiesenen Fähigkeiten sind, wobei der Vorrichtungskatalog (260) mit den identifizierten Fähigkeiten aktualisiert wird.

2. Computersystem (200) nach Anspruch 1, umfassend:
- einen Fähigkeitskatalog (270), der in der Gruppe verfügbare Fähigkeiten auflistet, wobei der Fähigkeitskatalog (270) mit den identifizierten Fähigkeiten aktualisiert wird;
- einen Fähigkeitsdefinitionskatalog (280), der Definitionen für synthetisierte Fähigkeiten und/oder Regeln für die Bildung von synthetisierten Fähigkeiten bereitstellt, wobei es sich bei den synthetisierten Fähigkeiten um Fähigkeiten handelt, die auf der Grundlage anderer Fähigkeiten gebildet werden können, wobei sie insbesondere synthetisiert werden können, indem Fähigkeiten kombiniert werden, die in dem Fähigkeitskatalog (270) aufgelistet sind; und
- ein Fähigkeitssynthesemodul (220), das dafür konfiguriert ist, auf der Grundlage der Informationen aus dem Fähigkeitsdefinitionskatalog (280) und auf der Grundlage der in der Gruppe verfügbaren Fähigkeiten synthetisierte Fähigkeiten zu synthetisieren, wobei die synthetisierten Fähigkeiten in dem Vorrichtungskatalog (260) und in dem Fähigkeitskatalog (270) gespeichert sind,
insbesondere wobei
- der Fähigkeitsdefinitionskatalog (280)
- Definitionen von Fähigkeiten bereitstellt, die keine synthetisierten Fähigkeiten sind, und/oder
- mit identifizierten Fähigkeiten aktualisiert wird, die in dem Fähigkeitsdefinitionskatalog (280) noch nicht definiert sind; und/oder
- das Fähigkeitssynthesemodul (220) dafür konfiguriert ist, den Fähigkeitsdefinitionskatalog (280) mit Definitionen für synthetisierte Fähigkeiten zu aktualisieren; und/oder
- das Beobachtermodul (230) dafür konfiguriert ist, das Identifizieren der Fähigkeiten nach einem vordefinierten Zeitintervall und/oder beim Empfang eines Auslösers zu wiederholen, wobei der Auslöser insbesondere Informationen über eine Veränderung im Zusammenhang mit den Vorrichtungen (251-253) umfasst.

3. Computersystem (200) nach Anspruch 2, wobei
- es sich bei wenigstens einer zweiten Untermenge der Vorrichtungen der Gruppe um intelligente Vorrichtungen (252, 253) handelt, wobei jede intelligente Vorrichtung selbstbeschreibende und/oder selbstreflektierende Funktionen umfasst, die dafür konfiguriert sind, Fähigkeiten der Vorrichtung zu offenbaren, und
- das Computersystem ferner ein Fähigkeitsdetektionsmodul (210) umfasst, das dafür konfiguriert ist, unter Verwendung der selbstbeschreibenden oder selbstreflektierenden Funktionen die Fähigkeiten der intelligenten Vorrichtungen (252, 253) zu detektieren und den Vorrichtungskatalog (260) und den Fähigkeitskatalog (270) mit den detektierten Fähigkeiten zu aktualisieren,
insbesondere wobei das Fähigkeitsdetektionsmodul (210) ferner dafür konfiguriert ist,
- identifizierte Fähigkeiten von dem Beobachtermodul (230) zu empfangen und den Vorrichtungskatalog (260) und den Fähigkeitskatalog (270) mit den identifizierten Fähigkeiten zu aktualisieren; und/oder
- synthetisierte Fähigkeiten von dem Fähigkeitssynthesemodul (220) zu empfangen und den Vorrichtungskatalog (260) und den Fähigkeitskatalog (270) mit den synthetisierten Fähigkeiten zu aktualisieren.

4. Computersystem (200) nach Anspruch 3, wobei die Vorrichtungen wenigstens eine oder mehrere erste Vorrichtungen (40a) oder zweite Vorrichtungen (40b) und wenigstens eine oder mehrere dritte Vorrichtungen (50) umfassen, wobei
- erste Vorrichtungen (40a) dafür konfiguriert sind, dem Computersystem Zugriff auf einen Datenspeicher der jeweiligen ersten Vorrichtung zu gewähren, insbesondere wobei ein kompatibler Software-Agent (30a) in den ersten Vorrichtungen installiert ist,
- zweite Vorrichtungen (40b) mit einem Modul (30b) ausgestattet sind, das dafür konfiguriert ist, Daten mit der Vorrichtung auszutauschen und dem Computersystem Zugriff auf einen Datenspeicher der jeweiligen zweiten Vorrichtung zu gewähren, insbesondere wobei ein kompatibler Software-Agent in dem Modul installiert ist, und
- es sich bei dritten Vorrichtungen (50) um Vorrichtungen handelt, die weder erste Vorrichtungen noch zweite Vorrichtungen sind,
insbesondere wobei die ersten und zweiten Vorrichtungen (40a,b) intelligente Vorrichtungen (252, 253) sind.

5. Computersystem (200) nach einem der vorhergehenden Ansprüche, wobei der Erkennungsalgorithmus (11) dafür konfiguriert ist, Hacking-Tools (15) zu verwenden und Zugriff darauf zu haben, um Zugriff auf eine Datenspeichereinheit (56) der Vorrichtung zu erhalten und/oder die Vorrichtung zu rekonfigurieren, insbesondere wobei das Beobachtermodul (230) Folgendes umfasst oder Zugriff auf Folgendes hat:
- die künstliche Intelligenz (12),
- die wenigstens eine Datenbank (13) und
- die Hacking-Tools (15).

6. Computersystem (200) nach einem der vorhergehenden Ansprüche, wobei der wenigstens eine Sensor (92) einer aus einem optischen Sensor, einem Akustik- und/oder Schwingungssensor, einem Temperatursensor, einem Infrarotsensor, einem Sensor für ein elektrisches Feld und/oder magnetisches Feld, einem Strahlungssensor, einem mechanischen und/oder hydrodynamischen Sensor, einem Trägheitssensor, einem Positions- oder Navigationssensor oder einem integrierten Sensor ist und wobei die Sensordaten von dem Erkennungsalgorithmus (11) für wenigstens eines von Folgendem verwendet werden:
- Bestimmen (150) des Vorhandenseins und/oder der Verfügbarkeit der wenigstens einen der Vorrichtungen (251-253),
- Identifizieren (170-175) der Fähigkeiten der wenigstens einen der Vorrichtungen (251-253), und
- Sammeln von Basisinformationen betreffend die wenigstens eine der Vorrichtungen (251-253), wobei die Basisinformationen insbesondere dafür verwendet werden, ein Kandidatenmodell für die Vorrichtung zu erzeugen.

7. Computerimplementiertes Verfahren (100) zur Identifizierung (170, 175) von Fähigkeiten einer Gruppe von Vorrichtungen durch ein Computersystem, wobei die Gruppe eine Mehrzahl von elektronischen Vorrichtungen (251-253) umfasst, wobei jede Vorrichtung (251-253) der Gruppe eine oder mehrere ausgewiesene Fähigkeiten aufweist, wobei wenigstens ein Sensor (92) dem Computersystem Sensordaten bereitstellt, wobei die Sensordaten Informationen über wenigstens eine der Vorrichtungen (251-253) umfassen,
**gekennzeichnet durch**
ein Bestimmen (160) eines bekannten Typs der wenigstens einen der Vorrichtungen (251-253), wobei das Bestimmen (160) des bekannten Typs Folgendes umfasst:
- Verwenden der Sensordaten zum Identifizieren von Attributen der Vorrichtung,
- Zugreifen auf eine Datenbank (13), die Informationen über Attribute einer Vielzahl von bekannten Vorrichtungstypen umfasst, und
- Durchführen einer probabilistischen Bewertung auf der Grundlage der identifizierten Attribute der Vorrichtung, wobei die Bewertung unter Verwendung von künstlicher Intelligenz (12) durchgeführt wird, die dafür programmiert ist, verfügbare Informationen über eine Vorrichtung zu analysieren,
wobei das Verfahren ferner Folgendes umfasst:
- Zugreifen auf und Beobachten von Datenströmen zwischen einer Middleware-Plattform (10) und wenigstens einer Untermenge der Vorrichtungen (251-253);
- Verwenden der künstlichen Intelligenz (12) und der Datenbank (13), um auf der Grundlage der beobachteten Datenströme Fähigkeiten der Vorrichtungen (251-253) der Untermenge zu identifizieren, die keine ausgewiesenen Fähigkeiten sind; und
- Speichern der identifizierten Fähigkeiten in einem Vorrichtungskatalog (260), wobei der Vorrichtungskatalog (260) bekannte Vorrichtungen und Fähigkeiten jeder aufgelisteten Vorrichtung auflistet.

8. Verfahren (100) nach Anspruch 7, umfassend:
- Speichern der identifizierten Fähigkeiten in einem Fähigkeitskatalog (270), wobei der Fähigkeitskatalog (270) in der Gruppe verfügbare Fähigkeiten auflistet;
- Bereitstellen von Definitionen für synthetisierte Fähigkeiten und/oder Regeln für die Bildung von synthetisierten Fähigkeiten, wobei es sich bei synthetisierten Fähigkeiten um Fähigkeiten handelt, die auf der Grundlage anderer Fähigkeiten gebildet werden können, insbesondere auf der Grundlage von Fähigkeiten, die in dem Fähigkeitskatalog (270) aufgelistet sind; und
- Synthetisieren von synthetisierten Fähigkeiten auf der Grundlage der Informationen aus dem Fähigkeitsdefinitionskatalog (280) und auf der Grundlage der in der Gruppe verfügbaren Fähigkeiten,
wobei der Fähigkeitsdefinitionskatalog (280) insbesondere
- Definitionen von Fähigkeiten bereitstellt, die keine synthetisierten Fähigkeiten sind; und/oder
- mit identifizierten Fähigkeiten, die in dem Fähigkeitsdefinitionskatalog (280) noch nicht identifiziert sind, aktualisiert wird.

9. Verfahren (100) nach Anspruch 7 oder Anspruch 8, umfassend:
- Empfangen (110), in dem Computersystem, einer Aufgabe zur Durchführung eines Prozesses, wobei eine oder mehrere Unteraufgaben als Teil des Prozesses durchgeführt werden müssen, und
- Identifizieren (120) von benötigten Fähigkeiten zum Durchführen von jeder der Unteraufgaben,
wobei das Identifizieren der Fähigkeiten der Vorrichtungen (251-253) das Bestimmen eines Vorhandenseins der benötigten Fähigkeiten in den Vorrichtungen umfasst, insbesondere wobei
- das Verfahren ferner Folgendes umfasst: Berechnen (180) eines Arbeitsablaufs zum Durchführen der Aufgabe, wobei der Arbeitsablauf eine oder mehrere Vorrichtungen einbezieht, deren Fähigkeiten identifiziert wurden, Verteilen der Unteraufgaben auf die eine oder die mehreren einbezogenen Vorrichtungen und Verwenden (191-193) der einen oder mehreren einbezogenen Vorrichtungen zum Durchführen der Aufgabe; und/oder
- das Identifizieren der Fähigkeiten einer Vorrichtung das Verwenden der künstlichen Intelligenz (15) umfasst, um Fähigkeiten der Vorrichtung zu identifizieren, bei denen es sich um unbeabsichtigte Fähigkeiten (71-72) oder nicht ausgewiesene Fähigkeiten (61-66) der Vorrichtung handelt, wobei insbesondere ein Vorhandensein von unbeabsichtigten oder nicht ausgewiesenen Fähigkeiten (61-66, 71-72), die als benötigte Fähigkeiten identifiziert wurden, bestimmt wird.

10. Verfahren (100) nach einem der Ansprüche 7 bis 9, wobei die Mehrzahl von elektronischen Vorrichtungen wenigstens eine oder mehrere erste Vorrichtungen (40a) oder zweite Vorrichtungen (40b) und wenigstens eine oder mehrere dritte Vorrichtungen (50) umfasst, wobei
- erste Vorrichtungen (40a) dafür konfiguriert sind, dem Computersystem Zugriff auf einen Datenspeicher der jeweiligen ersten Vorrichtung zu gewähren, insbesondere wobei ein kompatibler Software-Agent (30a) in den ersten Vorrichtungen installiert ist,
- zweite Vorrichtungen (40b) mit einem Modul (30b) ausgestattet sind, das dafür konfiguriert ist, Daten mit der Vorrichtung auszutauschen und dem Computersystem Zugriff auf einen Datenspeicher der jeweiligen zweiten Vorrichtung zu gewähren, insbesondere wobei ein kompatibler Software-Agent in dem Modul installiert ist, und
- es sich bei dritten Vorrichtungen (50) um Vorrichtungen handelt, die weder erste Vorrichtungen noch zweite Vorrichtungen sind,
wobei zur Bestimmung der Fähigkeiten von wenigstens einer dritten Vorrichtung (50) das Verfahren einen wenigstens teilweise automatischen laufenden Fähigkeitserkennungsprozess umfasst, in dessen Verlauf unter Verwendung einer künstlichen Intelligenz (12), die Zugriff auf eine Datenbank (13) hat, ein Typ von wenigstens einer dritten Vorrichtung (50) bestimmt oder abgeleitet wird, insbesondere wobei
- im Verlauf des Fähigkeitserkennungsprozesses Hacking-Tools (15) verwendet werden, um Zugriff auf eine Datenspeichereinheit (56) von wenigstens einer dritten Vorrichtung (50) zu erhalten, und wobei, insbesondere unter Verwendung der Hacking-Tools (15), eine Datenverbindung zwischen dem Computersystem und der dritten Vorrichtung hergestellt wird, wobei
- Protokolle und/oder Funktionen unter Verwendung der hergestellten Datenverbindung in der Vorrichtung installiert werden und die Fähigkeiten der dritten Vorrichtung (50) unter Verwendung der installierten Protokolle und/oder Funktionen identifiziert werden (170-175), und/oder
- geeignete Hacking-Tools (15) auf der Grundlage eines bestimmten oder abgeleiteten Typs von Vorrichtung ausgewählt werden,
insbesondere wobei die ersten und zweiten Vorrichtungen (40a,b) intelligente Vorrichtungen (252, 253) sind, die selbstbeschreibende oder selbstreflektierende Funktionen umfassen, die dafür konfiguriert sind, dem Computersystem Fähigkeiten der Vorrichtung zu offenbaren, und wobei die dritten Vorrichtungen (50) keine solchen sind.

11. Verfahren (100) nach Anspruch 10, wobei das Bestimmen (160) des Typs von wenigstens einer Vorrichtung das rekursive Identifizieren von weiteren Attributen der Vorrichtung umfasst, wenn die identifizierten Attribute mit Attributen von mehr als einem bekannten Typ übereinstimmen, insbesondere wobei das Identifizieren von Attributen der Vorrichtung Folgendes umfasst:
- Erzeugen, insbesondere auf der Grundlage verfügbarer Basisinformationen betreffend die Vorrichtung, eines Kandidatenmodells für die Vorrichtung, wobei das Kandidatenmodell einen angenommenen Typ und/oder angenommene Funktionen der Vorrichtung umfasst, und
- Verifizieren der Annahmen und/oder Bestimmen eines Erfüllungsgrads der Annahmen,
insbesondere wobei
- das Erzeugen des Kandidatenmodells Folgendes umfasst:
- Berücksichtigen von Umgebungsinformationen über die Umgebung der Vorrichtung, wobei die Umgebungsinformationen Informationen über Vorrichtungen umfassen, die typischerweise in der Umgebung vorhanden oder zu erwarten sind,
- Berücksichtigen von historischen Daten bezüglich einer früheren Identifizierung von Fähigkeiten, und/oder
- Verwenden von Sensordaten zum Sammeln von Basisinformationen betreffend die Vorrichtung, um das Erzeugen des Kandidatenmodells auf die gesammelten Basisinformationen zu stützen; und
- das Überprüfen der Annahmen und/oder das Bestimmen eines Erfüllungsgrads der Annahmen Folgendes umfasst:
- Verwenden von Hacking-Tools (15), um Zugriff auf eine Datenspeichereinheit (56) der dritten Vorrichtung (50) zu erhalten,
- Ausführen von Befehlen auf der Grundlage eines angenommenen Typs der dritten Vorrichtung (50), um angenommene Funktionen der dritten Vorrichtung (50) zu aktivieren, und
- Überwachen eines Verhaltens der dritten Vorrichtung (50) als Reaktion auf jeden Befehl.

12. Verfahren (100) nach Anspruch 10 oder Anspruch 11, umfassend:
- Herstellen einer Datenverbindung zwischen dem Computersystem und der einen oder den mehreren ersten Vorrichtungen (40a) oder zweiten Vorrichtungen (40b),
- Installieren von Protokollen und/oder Funktionen in der einen oder den mehreren ersten Vorrichtungen (40a) oder zweiten Vorrichtungen (40b) unter Verwendung der hergestellten Datenverbindung, und
- Identifizieren (170-175) von Fähigkeiten der einen oder mehreren ersten Vorrichtungen (40a) oder zweiten Vorrichtungen (40b) unter Verwendung der installierten Protokolle und/oder Funktionen.

13. Verfahren (100) nach einem der Ansprüche 7 bis 12, wobei der wenigstens eine Sensor (92) einer aus einem optischen Sensor, einem Akustik- und/oder Schwingungssensor, einem Temperatursensor, einem Infrarotsensor, einem Sensor für ein elektrisches Feld und/oder magnetisches Feld, einem Strahlungssensor, einem mechanischen und/oder hydrodynamischen Sensor, einem Trägheitssensor, einem Positions- oder Navigationssensor oder einem integrierten Sensor ist und wobei die Sensordaten für wenigstens eines von Folgendem verwendet werden:
- Bestimmen (150) des Vorhandenseins und/oder der Verfügbarkeit der wenigstens einen der Vorrichtungen,
- Bestimmen (160) eines bekannten Typs der wenigstens einen der Vorrichtungen, insbesondere um Attribute der Vorrichtung zu identifizieren,
- Identifizieren (170-175) der Fähigkeiten der wenigstens einen der Vorrichtungen, und
- Sammeln von Basisinformationen betreffend die wenigstens eine der Vorrichtungen, wobei die Basisinformationen dafür verwendet werden, ein Kandidatenmodell für die Vorrichtung zu erzeugen.

14. Verfahren (100) nach einem der Ansprüche 7 bis 13, wobei die Fähigkeiten wenigstens eines von Folgendem umfassen:
- Erfassungs- oder Messfähigkeiten,
- Produktions- oder Verarbeitungsfähigkeiten,
- Bewegungs-, Transport- oder Positionierungsfähigkeiten,
- Heiz- oder Kühlfähigkeiten,
- Beleuchtungs- oder Visualisierungsfähigkeiten,
- Kommunikationsfähigkeiten,
- Rechen- und/oder Datenspeicherfähigkeiten,
- Fähigkeiten zur elektrischen Aufladung oder Betankung, und
- Reparatur-, Wartungs- oder Instandhaltungsfähigkeiten.

15. Computerprogrammprodukt, das einen Programmcode umfasst, der auf einem maschinenlesbaren Medium gespeichert ist oder durch eine elektromagnetische Welle verkörpert wird, die ein Programmcodesegment umfasst, und das computerausführbare Anweisungen aufweist, die bei Ausführung des Programms durch das Computersystem nach einem der Ansprüche 1 bis 6 den Computer veranlassen, das Verfahren (100) nach einem der Ansprüche 8 bis 14 durchzuführen.

## Revendications

1. Système informatique (200) pour identifier (170, 175) les capacités d'un groupe de dispositifs électroniques (251-253), chaque dispositif (251-253) du groupe ayant une ou plusieurs capacités désignées, au moins un premier sous-ensemble des dispositifs du groupe étant connecté à une plate-forme intergicielle (10) au moyen d'une liaison de données, dans lequel le système informatique (200) comprend
- un catalogue de dispositifs (260) répertoriant les dispositifs connus et les capacités désignées de chaque dispositif répertorié ; et
- un module d'observation (230) ayant accès aux flux de données entre la plate-forme intergicielle (10) et le sous-ensemble de dispositifs (251-253) et étant configuré pour observer les flux de données,
le système informatique (200) étant configuré pour recevoir des données de capteur d'au moins un capteur (92), les données de capteur comprenant des informations sur au moins un des dispositifs (251-253),
**caractérisé en ce que**
le module d'observation (230) comprend ou a accès à au moins un algorithme de découverte (11) qui
- a accès à au moins une base de données (13) comprenant des informations sur les attributs d'une multitude de types connus de dispositifs,
- est configuré pour utiliser les données de capteur pour identifier les attributs dudit au moins un des dispositifs (251- 253), et
- est configuré pour déterminer (160) un type connu dudit au moins un des dispositifs (251-253),
dans lequel déterminer (160) le type connu d'un dispositif consiste à effectuer une évaluation probabiliste sur la base des attributs identifiés du dispositif, l'évaluation étant effectuée à l'aide d'une intelligence artificielle (12) programmée pour analyser les informations disponibles sur un dispositif,
dans lequel le module d'observation (230) est configuré pour identifier (170, 175), sur la base des flux de données observés et à l'aide de l'intelligence artificielle (12), des capacités des dispositifs (251-253) du sous-ensemble qui ne sont pas des capacités désignées, dans lequel le catalogue de dispositifs (260) est mis à jour avec les capacités identifiées.

2. Système informatique (200) selon la revendication 1, comprenant
- un catalogue de capacités (270) répertoriant les capacités disponibles dans le groupe, le catalogue de capacités (270) étant mis à jour avec les capacités identifiées ;
- un catalogue de définition de capacités (280) fournissant des définitions pour des capacités synthétisées et/ou des règles pour la constitution de capacités synthétisées, les capacités synthétisées étant des capacités pouvant être constituées sur la base d'autres capacités, en particulier pouvant être synthétisées en combinant des capacités répertoriées dans le catalogue de capacités (270) ; et
- un module de synthèse de capacités (220) configuré pour synthétiser, sur la base des informations provenant du catalogue de définition de capacités (280) et des capacités disponibles dans le groupe, des capacités synthétisées, les capacités synthétisées étant stockées dans le catalogue de dispositifs (260) et dans le catalogue de capacités (270),
en particulier dans lequel
- le catalogue de définition de capacités (280)
- fournit des définitions de capacités qui ne sont pas des capacités synthétisées, et/ou
- est mis à jour avec les capacités identifiées qui ne sont pas encore définies dans le catalogue de définition de capacités (280) ; et/ou
- le module de synthèse de capacités (220) est configuré pour mettre à jour le catalogue de définition de capacités (280) avec les définitions des capacités synthétisées ; et/ou
- le module d'observation (230) est configuré pour répéter l'identification des capacités après un intervalle de temps prédéfini et/ou à la réception d'un déclencheur, en particulier dans lequel le déclencheur comprend des informations sur un changement lié aux dispositifs (251-253).

3. Système informatique (200) selon la revendication 2, dans lequel
- au moins un deuxième sous-ensemble des dispositifs du groupe sont des dispositifs intelligents (252, 253), chaque dispositif intelligent comprenant des fonctions d'autodescription et/ou d'autoréflexion configurées pour divulguer les capacités du dispositif, et
- le système informatique comprend en outre un module de détection de capacités (210) configuré pour détecter les capacités des dispositifs intelligents (252, 253) utilisant les fonctions d'autodescription ou d'autoréflexion et pour mettre à jour le catalogue de dispositifs (260) et le catalogue de capacités (270) avec les capacités détectées,
en particulier dans lequel le module de détection de capacités (210) est en outre configuré
- pour recevoir des capacités identifiées du module d'observation (230) et pour mettre à jour le catalogue de dispositifs (260) et le catalogue de capacités (270) avec les capacités identifiées ; et/ou
- pour recevoir des capacités synthétisées du module de synthèse de capacités (220) et pour mettre à jour le catalogue de dispositifs (260) et le catalogue de capacités (270) avec les capacités synthétisées.

4. Système informatique (200) selon la revendication 3, dans lequel les dispositifs comprennent au moins un ou plusieurs premiers dispositifs (40a) ou deuxièmes dispositifs (40b) et au moins un ou plusieurs troisièmes dispositifs (50), dans lequel
- les premiers dispositifs (40a) sont configurés pour permettre au système informatique d'accéder à un stockage de données du premier dispositif respectif, en particulier dans lequel un agent logiciel compatible (30a) est installé sur les premiers dispositifs,
- les deuxièmes dispositifs (40b) sont équipés d'un module (30b) configuré pour échanger des données avec le dispositif et pour permettre au système informatique d'accéder à un stockage de données du deuxième dispositif respectif, en particulier dans lequel un agent logiciel compatible est installé sur le module, et
- les troisièmes dispositifs (50) sont des dispositifs qui ne sont ni des premiers ni des deuxièmes dispositifs,
en particulier dans lequel les premiers et deuxièmes dispositifs (40a, b) sont des dispositifs intelligents (252, 253).

5. Système informatique (200) selon l'une quelconque des revendications précédentes, dans lequel l'algorithme de découverte (11) est configuré pour utiliser et a accès à des outils de piratage (15) pour obtenir l'accès à une unité de stockage de données (56) du dispositif et/ou reconfigurer le dispositif, en particulier dans lequel le module d'observation (230) comprend ou a accès :
- à l'intelligence artificielle (12),
- à ladite au moins une base de données (13) et
- aux outils de piratage (15).

6. Système informatique (200) selon l'une quelconque des revendications précédentes, dans lequel ledit au moins un capteur (92) est l'un des capteurs suivants : un capteur optique, un capteur acoustique et/ou vibratoire, un capteur de température, un capteur infrarouge, un capteur de champ électrique et/ou magnétique, un capteur de rayonnement, un capteur mécanique et/ou hydrodynamique, un capteur inertiel, un capteur de positionnement ou de navigation, ou un capteur intégré, et dans lequel les données de capteur sont utilisées par l'algorithme de découverte (11) pour au moins l'une des opérations suivantes :
- déterminer (150) l'existence et/ou la disponibilité dudit au moins un des dispositifs (251-253),
- identifier (170-175) les capacités dudit au moins un des dispositifs (251-253), et
- collecter des informations de base concernant ledit au moins un des dispositifs (251-253), en particulier dans lequel les informations de base sont utilisées pour générer un modèle candidat pour le dispositif.

7. Procédé mis en oeuvre par ordinateur (100) pour identifier (170, 175), par un système informatique, les capacités d'un groupe de dispositifs, le groupe comprenant une pluralité de dispositifs électroniques (251-253), chaque dispositif (251-253) du groupe ayant une ou plusieurs capacités désignées, dans lequel au moins un capteur (92) fournit des données de capteur au système informatique, les données de capteur comprenant des informations sur au moins un des dispositifs (251-253),
**caractérisé par** les étapes consistant à
déterminer (160) un type connu dudit au moins un des dispositifs (251-253), la détermination (160) du type connu consistant à
- utiliser les données de capteur pour identifier les attributs du dispositif,
- accéder à une base de données (13) comprenant des informations sur les attributs d'une multitude de types connus de dispositifs, et
- effectuer une évaluation probabiliste sur la base des attributs identifiés du dispositif, l'évaluation étant effectuée à l'aide d'une intelligence artificielle (12) programmée pour analyser les informations disponibles sur un dispositif,
le procédé consistant en outre à
- accéder à et observer des flux de données entre une plateforme intergicielle (10) et au moins un sous-ensemble des dispositifs (251-253) ;
- utiliser l'intelligence artificielle (12) et la base de données (13) pour identifier, sur la base des flux de données observés, les capacités des dispositifs (251-253) du sous-ensemble qui ne sont pas des capacités désignées ; et
- stocker les capacités identifiées dans un catalogue de dispositifs (260), le catalogue de dispositifs (260) répertoriant les dispositifs connus et les capacités de chaque dispositif répertorié.

8. Procédé (100) selon la revendication 7, comprenant les étapes consistant à
- stocker les capacités identifiées dans un catalogue de capacités (270), le catalogue de capacités (270) répertoriant les capacités disponibles dans le groupe ;
- fournir des définitions pour des capacités synthétisées et/ou des règles pour la constitution de capacités synthétisées, les capacités synthétisées étant des capacités qui peuvent être constituées sur la base d'autres capacités, en particulier sur la base des capacités répertoriées dans le catalogue de capacités (270) ; et
- synthétiser, sur la base des informations du catalogue de définition de capacités (280) et des capacités disponibles dans le groupe, des capacités synthétisées,
en particulier dans lequel le catalogue de définition de capacités (280)
- fournit des définitions de capacités qui ne sont pas des capacités synthétisées ; et/ou
- est mis à jour avec les capacités identifiées qui ne sont pas encore définies dans le catalogue de définition de capacités (280).

9. Procédé (100) selon la revendication 7 ou la revendication 8, comprenant les étapes consistant à
- recevoir (110), au système informatique, une tâche pour exécuter un processus, une ou plusieurs sous-tâches devant être exécutées dans le cadre du processus, et
- identifier (120) des capacités nécessaires à l'exécution de chacune des sous-tâches,
dans lequel identifier les capacités des dispositifs (251-253) consiste à déterminer la présence des capacités nécessaires dans les dispositifs,
en particulier dans lequel
- le procédé consiste en outre à calculer (180) un flux de travail pour exécuter la tâche, le flux de travail impliquant un ou plusieurs dispositifs dont les capacités ont été identifiées, à distribuer les sous-tâches auxdits un ou plusieurs dispositifs impliqués, et à utiliser (191-193) lesdits un ou plusieurs dispositifs impliqués pour exécuter la tâche ; et/ou
- identifier les capacités d'un dispositif consiste à utiliser l'intelligence artificielle (15) pour identifier les capacités du dispositif qui sont des capacités non intentionnelles (71-72) ou non désignées (61-66) du dispositif, en particulier dans lequel on détermine une présence de capacités non intentionnelles ou non désignées (61-66, 71-72) qui ont été identifiées comme étant des capacités nécessaires.

10. Procédé (100) selon l'une quelconque des revendications 7 à 9,
dans lequel la pluralité de dispositifs électroniques comprend au moins un ou plusieurs premiers dispositifs (40a) ou deuxièmes dispositifs (40b) et au moins un ou plusieurs troisièmes dispositifs (50),
dans lequel
- les premiers dispositifs (40a) sont configurés pour permettre au système informatique d'accéder à un stockage de données du premier dispositif respectif, en particulier dans lequel un agent logiciel compatible (30a) est installé sur les premiers dispositifs,
- les deuxièmes dispositifs (40b) sont équipés d'un module (30b) configuré pour échanger des données avec le dispositif et pour permettre au système informatique d'accéder à un stockage de données du deuxième dispositif respectif, en particulier dans lequel un agent logiciel compatible est installé sur le module, et
- les troisièmes dispositifs (50) sont des dispositifs qui ne sont ni des premiers ni des deuxièmes dispositifs,
dans lequel, pour déterminer les capacités d'au moins un troisième dispositif (50), le procédé comprend un processus de découverte de capacités au moins partiellement automatique, au cours duquel un type d'au moins un troisième dispositif (50) est déterminé ou déduit à l'aide d'une intelligence artificielle (12) ayant accès à une base de données (13), en particulier dans lequel
- au cours du processus de découverte de capacités, des outils de piratage (15) sont utilisés pour obtenir l'accès à une unité de stockage de données (56) d'au moins un troisième dispositif (50), et une connexion de données est établie entre le système informatique et le troisième dispositif, en particulier à l'aide des outils de piratage (15), dans lequel
- des protocoles et/ou des fonctions sont installés sur le dispositif en utilisant la connexion de données établie, et les capacités du troisième dispositif (50) sont identifiées (170-175) en utilisant les protocoles et/ou fonctions installés, et/ou
- des outils de piratage appropriés (15) sont sélectionnés sur la base d'un type de dispositif déterminé ou déduit,
en particulier dans lequel les premier et deuxième dispositifs (40a, b) sont des dispositifs intelligents (252, 253) comprenant des fonctions d'autodescription ou d'autoréflexion configurées pour divulguer les capacités du dispositif au système informatique, et les troisièmes dispositifs (50) ne le sont pas.

11. Procédé (100) selon la revendication 10, dans lequel déterminer (160) le type d'au moins un dispositif consiste à identifier de manière récursive d'autres attributs du dispositif, si les attributs identifiés correspondent aux attributs de plus d'un type connu, en particulier dans lequel identifier les attributs du dispositif consiste à
- générer, en particulier sur la base des informations de base disponibles concernant le dispositif, un modèle candidat pour le dispositif, le modèle candidat comprenant un type supposé et/ou des fonctions supposées du dispositif, et
- vérifier les hypothèses et/ou déterminer le degré de réalisation des hypothèses,
en particulier dans lequel
- générer le modèle candidat consiste à
- prendre en compte des informations d'environnement sur l'environnement du dispositif, les informations d'environnement comprenant des informations sur les dispositifs qui sont généralement présents ou attendus dans l'environnement,
- prendre en compte des données historiques concernant une identification antérieure de capacités, et/ou
- utiliser des données de capteurs pour collecter des informations de base concernant le dispositif afin de baser la génération du modèle candidat sur les informations de base collectées ; et
- vérifier les hypothèses et/ou déterminer un degré de réalisation des hypothèses consiste à
- utiliser des outils de piratage (15) pour accéder à une unité de stockage de données (56) du troisième dispositif (50),
- exécuter des commandes, sur la base d'un type supposé du troisième dispositif (50), pour activer des fonctions supposées du troisième dispositif (50), et
- surveiller le comportement du troisième dispositif (50) en réponse à chaque commande.

12. Procédé (100) selon la revendication 10 ou la revendication 11, comprenant les étapes consistant à
- établir une connexion de données entre le système informatique et lesdits un ou plusieurs premiers dispositifs (40a) ou deuxièmes dispositifs (40b),
- installer des protocoles et/ou des fonctions sur lesdits un ou plusieurs premiers dispositifs (40a) ou deuxièmes dispositifs (40b) en utilisant la connexion de données établie, et
- identifier (170-175) les capacités desdits un ou plusieurs premiers dispositifs (40a) ou deuxièmes dispositifs (40b) en utilisant les protocoles et/ou fonctions installés.

13. Procédé (100) selon l'une quelconque des revendications 7 à 12, dans lequel ledit au moins un capteur (92) est l'un des capteurs suivants : un capteur optique, un capteur acoustique et/ou vibratoire, un capteur de température, un capteur infrarouge, un capteur de champ électrique et/ou magnétique, un capteur de rayonnement, un capteur mécanique et/ou hydrodynamique, un capteur inertiel, un capteur de positionnement ou de navigation, ou un capteur intégré, et dans lequel les données de capteurs sont utilisées pour au moins l'une des opérations suivantes :
- déterminer (150) l'existence et/ou la disponibilité dudit au moins un des dispositifs,
- déterminer (160) un type connu dudit au moins un des dispositifs, en particulier pour identifier les attributs du dispositif,
- identifier (170-175) les capacités dudit au moins un des dispositifs, et
- collecter des informations de base concernant ledit au moins un des dispositifs, dans lequel les informations de base sont utilisées pour générer un modèle candidat pour le dispositif.

14. Procédé (100) selon l'une quelconque des revendications 7 à 13,
dans lequel les capacités comprennent au moins l'une des capacités suivantes :
- des capacités de détection ou de mesure,
- des capacités de production ou de traitement,
- des capacités de mouvement, de transport ou de positionnement,
- des capacités de chauffage ou de refroidissement,
- des capacités d'éclairage ou de visualisation,
- des capacités de communication,
- des capacités de calcul et/ou de stockage de données,
- des capacités de charge électrique ou d'alimentation en carburant, et
- des capacités de réparation, d'entretien ou de maintenance.

15. Produit programme informatique comprenant un code de programme, qui est stocké sur un support lisible par une machine, ou qui est matérialisé par une onde électromagnétique comprenant un segment de code de programme, et comportant des instructions exécutables par ordinateur qui, lorsque le programme est exécuté par le système informatique selon l'une quelconque des revendications 1 à 6, amènent l'ordinateur à mettre en oeuvre le procédé (100) selon l'une quelconque des revendications 8 à 14.
